# EUROPÄISCHE PATENTSCHRIFT

(11) **EP 3 662 026 B1**
(45) Veröffentlichungstag und Bekanntmachung des Hinweises auf die Patenterteilung: **04.11.2020**
(21) Anmeldenummer: 17835821.4
(22) Anmeldetag: 15.12.2017
(51) Int. Cl.: C09D 7/00

(54) **BESCHICHTUNGSZUSAMMENSETZUNG ZUM ABDICHTEN VON OBERFLÄCHEN**
COATING COMPOSITION FOR SEALING SURFACES
COMPOSITION DE REVÊTEMENT POUR L'ÉTANCHÉIFICATION DE SURFACES

(43) Veröffentlichungstag der Anmeldung: 10.06.2020
(73) Patentinhaber: Wacker Chemie AG, 81737 München (DE); BASF SE, 67056 Ludwigshafen am Rhein (DE)
(72) Erfinder: STANJEK, Volker, 84539 Ampfing (DE); BAUER, Andreas, 84375 Kirchdorf (DE); WANDINGER, Michael, 84489 Burghausen (DE); ROSER, Angelika, 68161 Mannheim (DE); HOEVEL, Bernd, 76547 Sinzheim (DE)
(74) Vertreter: Budczinski, Angelika
(86) Internationale Anmeldenummer: PCT/EP2017/083103
(87) Internationale Veröffentlichungsnummer: WO 2019/114990

(56) Entgegenhaltungen:
- DE-A1-102008 043 825
- US-A1- 2009 124 751

## Beschreibung

Die Erfindung betrifft ein Verfahren zum Abdichten von Oberflächen sowie dafür verwendbare feuchtigkeitshärtende Beschichtungszusammensetzungen auf der Basis von silanvernetzenden Prepolymeren. Die Erfindung betrifft insbesondere ein Verfahren zur Abdichtung von äußeren Gebäudeoberflächen, Dächern und ähnlichem.

Es ist von enormer Wichtigkeit, anorganische und organische Baustoffe wie Beton oder Holz innen und außen an Gebäuden oder auf dem Dach gegen das Eindringen von Wasser abzudichten, um eine Zerstörung der Bausubstanz oder auch das Eindringen von Wasser ins Innere des Gebäudes zu verhindern.

Viele in der Vergangenheit häufig verwendete Abdichtungsstoffe wie Bitumen-Bahnen sind auf komplexen Dächern mit vielen Details fast vollkommen verschwunden, da bei ihrem Einsatz ein Abdichten von Ecken und Kanten ausgesprochen schwierig ist. Dieses Problem wurde später durch den Einsatz von geschmolzenem Bitumen gelöst, wodurch aber andere Gefahren für den Handwerker entstanden, wie das Einatmen giftiger Dämpfe sowie der Umgang der sehr heißen Flüssigkeiten. Andere früher im Einsatz befindliche Lösungen wie lösungsmittelhaltige Bitumen-Systeme wurden aufgrund von VOC-Limitierungen und toxikologischen Gesichtspunkten durch andere Technologien ersetzt.

Heutzutage finden in der Dachabdichtung vornehmlich wasserbasierte Beschichtungsmassen wie acrylat- oder polymermodifizierte Bitumen-Emulsionen Verwendung, aber auch ein- und zweikomponentige Polyurethan-Systeme spielen immer noch eine signifikante Rolle.

Ein großer Nachteil wässriger Emulsionen ist die physikalische Trocknung der Materialien, welche insbesondere unter einer Temperatur von 15 °C sehr lange dauert. Andererseits wird die Trocknung an der Oberfläche oberhalb von 25 °C vergleichsweise schnell, so dass es zu Wassereinschlüssen und nachfolgend zur Blasenbildung kommen kann. So entstehen Schwachstellen in der Beschichtung, die zu Leckagen führen können.

Einkomponentige polyurethanbasierte Abdichtungssysteme enthalten gewöhnlich große Mengen Lösungsmittel, um die Viskosität für Streich- oder Roll-Applikationen im Dachbereich auf ein akzeptables Niveau zu senken. Zweikomponentige Polyurethansysteme sind im Vergleich dazu sehr teuer und erfordern eine komplizierte Applikationstechnologie. Alle Polyurethan-Abdichtungssysteme enthalten hochtoxische Isocyanatverbindungen, deren Einsatz in nahezu allen Heimwerker-, aber auch in vielen Handwerker-Anwendungen kritisch zu sehen ist.

RTV-1 Silicon-Beschichtungsformulierungen wie Acetat- oder Oxim-Systeme geben bei der Härtung schlecht riechende oder sogar gesundheitsschädliche Spaltprodukte, z.B. Essigsäure oder Oxim, ab. Weitere Nachteile dieser Materialien sind die schlechte Haftung auf einer Vielzahl von Baustoffen, die schlechte Überstreichbarkeit und die ungenügende Bewitterungsstabilität.

Eine ausgesprochen vorteilhafte Technologie basiert auf einkomponentigen feuchtigkeitshärtenden Beschichtungsmassen auf Basis von silanterminierten Polymeren. Neben sehr guten mechanischen Eigenschaften zeichnen sich entsprechende Produkte durch eine gute Verarbeitbarkeit, eine schnelle und vollständige Aushärtung und ihre toxikologische Unbedenklichkeit aus. Auf dieser Technologie basierende Materialien und ihre Verwendung als Abdichtungsmaterialien für Dachbeschichtungen sind z.B. aus EP-A 1 987 108, EP-A 2 352 776 und EP-A 2 561 024 bekannt.

Besonders vorteilhaft sind dabei Mischungen, die neben den silanterminierten Polymeren auch noch größere Mengen eines Reaktivverdünners enthalten. Der Vorteil entsprechender Mischungen liegt zum einen in ihrer niedrigen Viskosität und entsprechend guten Verarbeitbarkeit und zum anderen in der Tatsache, dass der Reaktivverdünner bei der Aushärtung mit in das entstehende Netzwerk eingebaut wird und somit weder ein VOC darstellt noch als nicht vernetzte und somit weichmachende Komponente in der ausgehärteten Masse verbleibt.

Allerdings weisen sämtliche silanvernetzenden Polymere, die bislang in Dachbeschichtungen Verwendung finden, den Nachteil auf, über ein Rückgrat zu verfügen, das ganz oder zumindest zu großen Teilen aus Polyethern, insbesondere aus Polypropylenglycolen, besteht. Polyether sind jedoch oxidationslabil und neigen bei UV-Bestrahlung zur Peroxidbildung, wobei die gebildeten Peroxide in nachfolgenden Abbaureaktionen das Polymernetzwerk schädigen oder sogar vollständig zerstören können. Dementsprechend sind die entsprechenden Beschichtungen vergleichsweise UV-labil. Dies ist insbesondere bei Dachbeschichtungen, die selbst in gemäßigten Breiten einer hohen UV-Belastung ausgesetzt sind, selbstverständlich ein großes Problem.

Ein gängiger Ansatz zur Lösung des Problems einer mangelnden UV-Beständigkeit stellt der Einsatz von Radikalfängern, insbesondere die Verwendung sogenannter HALS-Produkte (hindered amine light stabilizers) dar, wobei in vielen Fällen besonders gute Ergebnisse erzielt werden, wenn die HALS-Radikalfänger in Kombination mit UV-Absorbern und/oder Antioxidantien eingesetzt werden.

In vielen Fällen werden dabei mit HALS-Stabilisatoren besonders gute Ergebnisse erzielt. Dies liegt vor allem daran, dass diese anders als herkömmliche Radikalfänger oder auch Antioxidantien ihre Aufgabe erfüllen können, ohne dabei verbraucht zu werden. So reagieren sie mit Radikalen und/oder Peroxiden nicht irreversibel ab, sondern werden über Folgereaktionen stets regeneriert - eine Reaktionsfolge, die dem Fachmann als Denisov Zyklus bekannt ist.

Dieser Abbaumechanismus für Radikale, bei dem es zu keinem Verbrauch der HALS-Stabilisatoren kommt, führt in vielen Systemen dazu, dass sich mit HALS-Stabilisatoren eine gute und vor allem lang anhaltende Schutzwirkung erreichen lässt.

Doch anders als bei vielen anderen Systemen zeigen die gängigen HALS-Stabilisatoren in den oben beschriebenen Dachbeschichtungen auf Basis silanterminierter Polymere nur eine vergleichsweise geringe Schutzwirkung. Bereits nach kurzer Bewitterung zeigen die entsprechenden Beschichtungen deutlich Schäden, die bei fortschreitender UV-Belastung fast immer zu einer vollständigen Zerstörung der Beschichtung führen können. Es scheint offensichtlich, dass herkömmliche HALS-Stabilisatoren nicht in der Lage sind, Dachbeschichtungen auf Basis silanterminierter Polymere eine langanhaltende Witterungsbeständigkeit zu verleihen.

Dies gelang bislang auch nicht mit anderen - in der Regel noch weniger wirksamen - Stabilisatortypen, wie z.B. Antioxidantien oder auch Radikalfängern, die bei der Erfüllung ihrer Aufgabe verbraucht werden.

US 2009/0124751 A1 beschreibt feuchtigkeitsvernetzbare Zusammensetzungen, insbesondere Klebstoffe, die neben silyliertem Harz gegebenenfalls UV-Stabilisatoren enthalten können.

In DE 10 2008 043 825 wird ein Verfahren zum Abdichten von Oberflächen beschrieben unter Verwendung einer feuchtigkeitsvernetzbaren Zusammensetzung, die gegebenenfalls Lichtstabilisatoren enthalten kann.

Somit bestand die Aufgabe, eine Zusammensetzung auf Basis von silanterminierten Polymeren zur Abdichtung von Oberflächen, insbesondere von Dächern, zu finden, die in dieser Anwendung eine deutlich verbesserte und insbesondere langanhaltende Witterungsbeständigkeit zeigt.

Gegenstand der Erfindung sind feuchtigkeitshärtende Beschichtungszusammensetzungen (BS) enthaltend
(A) mindestens eine Verbindung der Formel

   Y-[(CR¹₂)_{b}-SiRₐ(OR²)₃₋ₐ]ₓ (I),

   wobei
   - Y: einen x-wertigen, über Stickstoff, Sauerstoff, Schwefel oder Kohlenstoff gebundenen Polymerrest bedeutet,
   - R: gleich oder verschieden sein kann und einen einwertigen, gegebenenfalls substituierten, SiC-gebundenen Kohlenwasserstoffrest darstellt,
   - R¹: gleich oder verschieden sein kann und Wasserstoffatom oder einen einwertigen, gegebenenfalls substituierten Kohlenwasserstoffrest darstellt, der über Stickstoff, Phosphor, Sauerstoff, Schwefel oder Carbonylgruppe an das Kohlenstoffatom angebunden sein kann,
   - R²: gleich oder verschieden sein kann und Wasserstoffatom oder einen einwertigen, gegebenenfalls substituierten Kohlenwasserstoffrest darstellt,
   - x: eine ganze Zahl von 1 bis 10, bevorzugt 1, 2 oder 3, besonders bevorzugt 1 oder 2, ist,
   - a: gleich oder verschieden sein kann und 0, 1 oder 2, bevorzugt 0 oder 1, ist und
   - b: gleich oder verschieden sein kann und eine ganze Zahl von 1 bis 10, bevorzugt 1, 3 oder 4, besonders bevorzugt 1 oder 3, insbesondere 1, ist,
(B) eine oder mehrere HALS-Stabilisatoren, die ausgewählt werden aus
   (B1) Mischungen verschiedener organischer Verbindungen, die pro Molekül mindestens eine funktionelle Gruppe der Formel 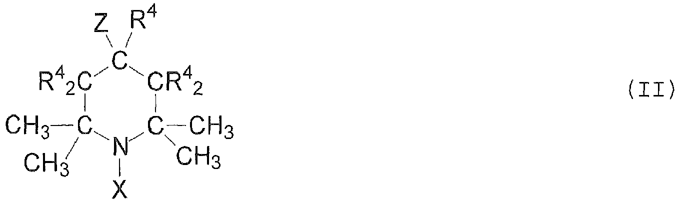 aufweisen, mit der Maßgabe, dass die in dieser Mischung enthaltenen organischen Verbindungen pro Molekül im Mittel mehr als zwei funktionelle Gruppen der Formel (II) enthalten,
   (B2) organischen Verbindungen mit mindestens drei funktionellen Gruppen der Formel (II) und
   (B3) organischen Verbindungen mit mindestens drei funktionellen Gruppen, ausgewählt aus funktionellen Gruppen der Formel (II) und gegebenenfalls substituierten Hydroxyphenylgruppen,
   wobei
   - X: einen N-gebundenen, einwertigen Rest R³, einen Rest -OR³, einen Rest -C(=O)R³ oder eine chemische Bindung zu weiteren Strukturelementen des Stabilisatormoleküls darstellt,
   - Z: Wasserstoffatom, einen Rest -OR¹³ oder eine NR¹³₂-Gruppe darstellt,
   - R³: gleich oder verschieden sein kann und ein Wasserstoffatom oder einen einwertigen gegebenenfalls substituierten Kohlenwasserstoffrest, der von Sauerstoffatomen, Estergruppen oder Amingruppen unterbrochenen sein kann, darstellt,
   - R¹³: gleich oder verschieden sein kann und eine der für R³ angegebene Bedeutung hat oder eine chemische Bindung zu weiteren Strukturelementen des Stabilisatormoleküls darstellt, und
   - R⁴: gleich oder verschieden sein kann und ein Wasserstoffatom oder einen einwertigen, gegebenenfalls substituierten Kohlenwasserstoffrest darstellt,
mit der Maßgabe, dass mindestens einer der Reste X oder R¹³ in Formel (II) eine chemische Bindung zu weiteren Strukturelementen des Stabilisatormoleküls darstellt.

Der Erfindung liegt die überraschende Entdeckung zugrunde, dass die erfindungsgemäßen Massen einen deutlich verbesserten und vor allem deutlich langlebigeren UV-Schutz gewährleisten können als herkömmliche Massen mit HALS-Stabilisatoren, die pro Molekül über maximal zwei funktionelle Gruppen ausgewählt aus der Formel (II) und gegebenenfalls unsubstituierten Hydroxyphenylgruppen verfügen.

Beispiele für Reste R sind Alkylreste, wie der Methyl-, Ethyl-, n-Propyl-, iso-Propyl-, 1-n-Butyl-, 2-n-Butyl-, isoButyl-, tert.-Butyl-, n-Pentyl-, iso-Pentyl-, neo-Pentyl-, tert.-Pentylrest; Hexylreste, wie der n-Hexylrest; Heptylreste, wie der n-Heptylrest; Octylreste, wie der n-Octylrest, iso-Octylreste und der 2,2,4-Trimethylpentylrest; Nonylreste, wie der n-Nonylrest; Decylreste, wie der n-Decylrest; Dodecylreste, wie der n-Dodecylrest; Octadecylreste, wie der n-Octadecylrest; Cycloalkylreste, wie der Cyclopentyl-, Cyclohexyl-, Cycloheptylrest und Methylcyclohexylreste; Alkenylreste, wie der Vinyl-, 1-Propenyl- und der 2-Propenylrest; Arylreste, wie der Phenyl-, Naphthyl-, Anthryl- und Phenanthrylrest; Alkarylreste, wie o-, m-, p-Tolylreste; Xylylreste und Ethylphenylreste; und Aralkylreste, wie der Benzylrest, der α- und der β-Phenylethylrest.

Beispiele für substituierte Reste R sind Halogenalkylreste, wie der 3,3,3-Trifluor-n-propylrest, der 2,2,2,2',2',2'-Hexafluor-isopropylrest und der Heptafluorisopropylrest, und Halogenarylreste, wie der o-, m- und p-Chlorphenylrest.

Bevorzugt handelt es sich bei Rest R um gegebenenfalls mit Halogenatomen substituierte, einwertige Kohlenwasserstoffreste mit 1 bis 6 Kohlenstoffatomen, besonders bevorzugt um Alkylreste mit 1 oder 2 Kohlenstoffatomen, insbesondere um den Methylrest.

Beispiele für Reste R¹ sind Wasserstoffatom, die für R angegebenen Reste sowie über Stickstoff, Phosphor, Sauerstoff, Schwefel, Kohlenstoff oder Carbonylgruppe an das Kohlenstoffatom gebundene, gegebenenfalls substituierte Kohlenwasserstoffreste.

Bevorzugt handelt es sich bei Rest R¹ um Wasserstoffatom oder Kohlenwasserstoffreste mit 1 bis 20 Kohlenstoffatomen, insbesondere um Wasserstoffatom.

Beispiele für Rest R² sind Wasserstoffatom oder die für Rest R angegebenen Beispiele.

Bevorzugt handelt es sich bei Rest R² um Wasserstoffatom oder gegebenenfalls mit Halogenatomen substituierte Alkylreste mit 1 bis 10 Kohlenstoffatomen, besonders bevorzugt um Alkylreste mit 1 bis 4 Kohlenstoffatomen, insbesondere um den Methyl- oder Ethylrest.

Als Polymere, welche dem Polymerrest Y zugrunde liegen, sind im Sinne der vorliegenden Erfindung alle Polymere zu verstehen, bei denen mindestens 50%, bevorzugt mindestens 70%, besonders bevorzugt mindestens 90%, aller Bindungen in der Hauptkette Kohlenstoff-Kohlenstoff-, Kohlenstoff-Stickstoff- oder Kohlenstoff-Sauerstoff-Bindungen sind.

Beispiele für Polymerreste Y sind Polyester-, Polyether-, Polyurethan-, Polyalkylen- und Polyacrylatreste.

Bei Polymerrest Y handelt es sich vorzugsweise um organische Polymerreste, die als Polymerkette Polyoxyalkylene, wie Polyoxyethylen, Polyoxypropylen, Polyoxybutylen, Polyoxytetramethylen, Polyoxyethylen-Polyoxypropylen-Copolymer und Polyoxypropylen-Polyoxybutylen-Copolymer; Kohlenwasserstoffpolymere, wie Polyisobutylen und Copolymere von Polyisobutylen mit Isopren; Polychloroprene; Polyisoprene; Polyurethane; Polyester; Polyamide; Polyacrylate; Polymethacrylate; Vinylpolymer oder Polycarbonate enthalten und die vorzugsweise über -O-C(=O)-NH-, -NH-C(=O)O-, -NH-C(=O)-NH-, -NR'-C(=O)-NH-, NH-C(=O)-NR'-, -NH-C(=O)-, -C(=O)-NH-, -C(=O)-O-, -O-C(=O)-, -O-C(=O)-O-, -S-C(=O)-NH-, -NH-C(=O)-S-, -C(=O)-S-, -S-C(=O)-, -S-C(=O)-S-, -C(=O)-, -S-, -O- oder -NR'- an die Gruppe bzw. Gruppen -[(CR¹₂)_{b}-SiRₐ(OR²)₃₋ₐ] gebunden sind, wobei R' gleich oder verschieden sein kann und eine für R angegebene Bedeutung hat oder für eine Gruppe -CH(COOR")-CH₂-COOR" steht, in der R" gleich oder verschieden sein kann und eine für R angegebene Bedeutung hat.

Bei Rest R' handelt es sich vorzugsweise um eine Gruppe -CH(COOR")-CH₂-COOR" oder einen gegebenenfalls substituierten Kohlenwasserstoffrest mit 1 bis 20 Kohlenstoffatomen, besonders bevorzugt um eine lineare, verzweigte oder cyclische Alkylgruppe mit 1 bis 20 Kohlenstoffatomen oder um eine gegebenenfalls mit Halogenatomen substituierte Arylgruppe mit 6 bis 20 Kohlenstoffatomen.

Beispiele für Reste R' sind Cyclohexyl-, Cyclopentyl-, n- und iso-Propyl-, n-, iso- und t-Butyl-, die diversen Stere-oisomere des Pentylrests, Hexylrests oder Heptylrests sowie der Phenylrest.

Bei den Resten R" handelt es sich vorzugsweise um Alkylgruppen mit 1 bis 10 Kohlenstoffatomen, besonders bevorzugt um Methyl-, Ethyl- oder Propylreste.

Die Komponente (A) kann dabei die auf die beschriebene Weise angebundenen Gruppen -[(CR¹₂)_{b}-SiRₐ(OR² )₃₋ₐ] an beliebigen Stellen im Polymer aufweisen, wie etwa kettenständig und/oder endständig.

Bevorzugt handelt es sich bei Rest Y um Polyurethanreste oder Polyoxyalkylenreste, besonders bevorzugt um kettenförmige Polyurethanreste oder kettenförmige Polyoxyalkylenreste mit jeweils 0 bis 3 Verzweigungsstellen und endständig angebundenen Gruppen -[(CR¹₂)_{b}-SiRₐ(OR²)₃₋ₐ], wobei als Verzweigungsstellen im Sinne der Erfindung alle Abzweigungen von der Hauptkette mit mehr als einem Kohlenstoffatom zu verstehen sind und die Reste und Indizes die oben genannten Bedeutungen haben.

Insbesondere handelt es sich bei Rest Y in Formel (I) um kettenförmige Polyurethanreste oder kettenförmige Polyoxyalkylenreste ohne Verzweigungsstellen mit endständig angebundenen Gruppen -[(CR¹₂)_{b}-SiRₐ(OR²)₃₋ₐ], wobei die Reste und Indizes die oben genannten Bedeutungen haben.

Bei den Polyurethanresten Y handelt es sich bevorzugt um solche, deren Kettenenden über -NH-C(=O)O-, -NH-C(=O)-NH-, -NR'-C(=O)-NH- oder -NH-C(=O)-NR'-, insbesondere über -O-C(=O)-NH- oder -NH-C(=O)-NR'-, an die Gruppe bzw. Gruppen - [(CR¹₂)_{b}-SiRₐ(OR²)₃₋ₐ] gebunden sind, wobei sämtliche Reste und Indizes eine der o.g. Bedeutungen haben. Die Polyurethanreste Y sind dabei vorzugsweise aus linearen oder verzweigten Polyoxyalkylenen, insbesondere aus Polypropylenglycolen, und Di- oder Polyisocyanaten herstellbar. Die Polyurethanreste Y weisen dabei vorzugsweise mittlere Molmassen Mₙ (Zahlenmittel) von 400 bis 30 000 g/mol, bevorzugt von 4 000 bis 20 000 g/mol, auf. Geeignete Verfahren zur Herstellung einer entsprechenden Komponente (A) sowie auch Beispiele für die Komponente (A) selbst sind unter anderem in EP 1 093 482 B1 (Absätze [0014] - [0023], [0039] - [0055] sowie Beispiel 1 und Vergleichsbeispiel 1) oder EP 1 641 854 B1 (Absätze [0014] - [0035], Beispiele 4 und 6 sowie die Vergleichsbeispiele 1 und 2) beschrieben, die zum Offenbarungsgehalt der vorliegenden Anmeldung zu zählen sind.

Die zahlenmittlere Molmasse Mₙ wird dabei im Rahmen der vorliegenden Erfindung mittels Size Exclusion Chromatography (SEC) gegen Polystyrol-Standard, in THF, bei 60°C, Flow Rate 1,2 ml/min und Detektion mit RI (Brechungsindex-Detektor) auf einem Säulenset Styragel HR3-HR4-HR5-HR5 von Waters Corp. USA mit einem Injektionsvolumen von 100 µl bestimmt.

Bei den Polyoxyalkylenresten Y handelt es sich bevorzugt um lineare oder verzweigte Polyoxyalkylenreste, besonders bevorzugt um Polyoxypropylenreste, deren Kettenenden vorzugsweise über -O-C(=O)-NH- oder -0- an die Gruppe bzw. Gruppen - [(CR¹₂)_{b}-SiRₐ(OR²)₃₋ₐ] gebunden sind, wobei die Reste und Indizes eine der oben genannten Bedeutungen haben. Vorzugsweise sind dabei mindestens 85%, besonders bevorzugt mindestens 90%, insbesondere mindestens 95%, aller Kettenenden über -O-C(=O)-NH- an die Gruppe -[(CR¹₂)_{b}-SiRₐ(OR²)₃₋ₐ] gebunden. Die Polyoxyalkylenreste Y weisen vorzugsweise mittlere Molmassen Mₙ von 4 000 bis 30 000 g/mol, bevorzugt von 8 000 bis 20 000 g/mol, auf. Geeignete Verfahren zur Herstellung einer entsprechenden Komponente (A) sowie auch Beispiele für die Komponente (A) selbst sind unter anderem in EP 1 535 940 B1 (Absätze [0005] - [0025] sowie Beispiele 1-3 und Vergleichsbeispiel 1-4) oder EP 1 896 523 B1 (Absätze [0008]-[0047]) beschrieben, die zum Offenbarungsgehalt der vorliegenden Anmeldung zu zählen sind.

Bei den Endgruppen der erfindungsgemäß eingesetzten Verbindungen (A) handelt es sich vorzugsweise um solche der allgemeinen Formeln

-NH-C(=O)-NR'-(CR¹₂)_{b}-SiRₐ(OR²)₃₋ₐ (Ia),

-O-C(=O)-NH-(CR¹₂)_{b}-SiRₐ(OR²)₃₋ₐ (Ib)

oder

-O-(CR¹₂)_{b}-SiRₐ(OR²)₃₋ₐ (Ic),

wobei die Reste und Indizes eine der oben dafür angegebenen Bedeutungen haben.

Sofern es sich bei den Verbindungen (A) um Polyurethane handelt, was bevorzugt ist, weisen diese vorzugsweise eine oder mehrere der Endgruppen

-NH-C(=O)-NR'-(CH₂)₃-Si(OCH₃)₃,

-NH-C(=O)-NR'-(CH₂)₃-Si(OC₂H₅)₃,

-O-C(=O)-NH-(CH₂)₃-Si(OCH₃)₃

oder

-O-C(=O)-NH-(CH₂)₃-Si(OC₂H₅)₃

auf, wobei R' die oben genannte Bedeutung hat.

Sofern es sich bei den Verbindungen (A) um Polypropylenglycole handelt, was besonders bevorzugt ist, weisen diese vorzugsweise eine oder mehrere der Endgruppen

-O-(CH₂)₃-Si(CH₃)(OCH₃)₂,

-O-(CH₂)₃-Si(OCH₃)₃,

-O-C(=O)-NH-(CH₂)₃-Si(OC₂H₅)₃,

-O-C(=O)-NH-CH₂-Si(CH₃)(OC₂H₅)₂,

-O-C(=O)-NH-CH₂-Si(OCH₃)₃,

-O-C(=O)-NH-CH₂-Si(CH₃)(OCH₃)₂

oder

-O-C(=O)-NH-(CH₂)₃-Si(OCH₃)₃

auf,
wobei die beiden letztgenannten Endgruppen besonders bevorzugt werden.

Die mittleren Molekulargewichte Mₙ der Verbindungen (A) betragen vorzugsweise mindestens 400 g/mol, besonders bevorzugt mindestens 4 000 g/mol, insbesondere mindestens 10 000 g/mol, und vorzugsweise höchstens 30 000 g/mol, besonders bevorzugt höchstens 20 000 g/mol, insbesondere höchstens 19 000 g/mol.

Die Viskosität der Verbindungen (A) beträgt vorzugsweise mindestens 0,2 Pas, bevorzugt mindestens 1 Pas, besonders bevorzugt mindestens 5 Pas, und vorzugsweise höchstens 700 Pas, bevorzugt höchstens 100 Pas, jeweils gemessen bei 20°C.

Die Viskosität von nicht pastösen Flüssigkeiten wird im Rahmen der vorliegenden Erfindung nach einer Temperierung auf 23°C mit einem DV 3 P-Rotationsviskosimeter von Fa. A. Paar (Brookfieldsysteme) unter Verwendung von Spindel 6 bei 5 Hz entsprechend der ISO 2555 bestimmt.

Die erfindungsgemäß eingesetzten Verbindungen (A) sind handelsübliche Produkte oder können nach in der Chemie gängigen Verfahren hergestellt werden.

Die Herstellung der Polymere (A) kann durch bekannte Verfahren erfolgen, wie Additionsreaktionen, wie z.B. der Hydrosilylierung, Michael-Addition, Diels-Alder-Addition oder Reaktionen zwischen isocyanatfunktionellen Verbindungen mit Verbindungen, die isocyanatreaktive Gruppen aufweisen.

Die erfindungsgemäß eingesetzte Komponente (A) kann nur eine Art von Verbindung der Formel (I) enthalten wie auch Gemische unterschiedlicher Arten von Verbindungen der Formel (I). Dabei kann die Komponente (A) ausschließlich Verbindungen der Formel (I) enthalten, in denen mehr als 90%, bevorzugt mehr als 95% und besonders bevorzugt mehr als 98%, aller an den Rest Y gebundenen Silylgruppen identisch sind. Es kann dann aber auch eine Komponente (A) eingesetzt werden, die zumindest zum Teil Verbindungen der Formel (I) enthält, bei denen an einen Rest Y unterschiedliche Silylgruppen gebunden sind. Schließlich können als Komponente (A) auch Gemische verschiedener Verbindungen der Formel (I) eingesetzt werden, in denen insgesamt mindestens 2 unterschiedliche Arten von an Reste Y gebundene Silylgruppen vorhanden sind, wobei jedoch sämtliche an jeweils einen Rest Y gebundenen Silylgruppen identisch sind.

Vorzugsweise enthalten die erfindungsgemäßen Beschichtungszusammensetzungen (BS) Verbindungen (A) in Konzentrationen von höchstens 60 Gew.-%, besonders bevorzugt höchstens 40 Gew.-%, und vorzugsweise mindestens 8 Gew.-%, besonders bevorzugt mindestens 12 Gew.-%.

Beispiele für Reste R³ sind die oben für R angegebenen Reste sowie Wasserstoffatom, Alkylgruppen mit 1 bis 16 Kohlenstoffatomen und Derivate des 1,3,5 Triazins, die vorzugsweise über eine Alkylengruppe angebunden sind.

Bevorzugt handelt es sich bei Rest R³ um ein Wasserstoffatom oder einen unsubstituierten Kohlenwasserstoffrest, besonders bevorzugt um ein Wasserstoffatom oder eine Alkylgruppe mit 1 bis 8 Kohlenstoffatomen.

Beispiele für Reste R¹³ sind die oben für R³ angegebenen Reste sowie eine chemische Bindung zu weiteren Strukturelementen des Stabilisatormoleküls.

Bevorzugt handelt es sich bei Rest R¹³ um ein Wasserstoffatom oder einen unsubstituierten Kohlenwasserstoffrest, besonders bevorzugt um ein Wasserstoffatom oder eine Alkylgruppe mit 1 bis 8 Kohlenstoffatomen.

Beispiele für Reste X sind die oben für R³ angegebenen Reste, Reste -OR³ oder -C(=O)R³, wobei R³ eine der o.g. beispielhaften Bedeutungen aufweist, sowie eine chemische Bindung zu weiteren Strukturelementen des Stabilisatormoleküls.

Bevorzugt handelt es sich bei Rest X um eine chemische Bindung zu weiteren Strukturelementen des Stabilisatormoleküls, um ein Wasserstoffatom oder einen unsubstituierten Kohlenwasserstoffrest, besonders bevorzugt um ein Wasserstoffatom oder eine Alkylgruppe mit 1 bis 8 Kohlenstoffatomen.

Beispiele für Reste Z sind Reste -OR¹³ oder Reste -NR¹³₂, wobei R¹³ eine der o.g. beispielhaften Bedeutungen aufweist.

Bevorzugt handelt es sich bei Rest Z um Reste -OR¹³ oder Reste -NR¹³₂, wobei R¹³ unabhängig voneinander jeweils eine chemische Bindung zu weiteren Strukturelementen des Stabilisatormoleküls, ein Wasserstoffatom oder einen unsubstituierten Kohlenwasserstoffrest darstellt.

Besonders bevorzugt handelt es sich bei Rest Z um Reste -OR¹³ oder Reste -NR¹³₂, insbesondere um -NR¹³₂, wobei R¹³ unabhängig voneinander jeweils eine chemische Bindung zu weiteren Strukturelementen des Stabilisatormoleküls darstellt.

Beispiele für Reste R⁴ sind die oben für R angegebenen Reste sowie Wasserstoffatom.

Bevorzugt handelt es sich bei Rest R⁴ um Wasserstoffatom.

Bevorzugt handelt es sich bei den funktionellen Gruppen der Formel (II) um solche, ausgewählt aus den Formeln (IIa), (IIb), (IIc), (IId), (IIe) und (IIf), 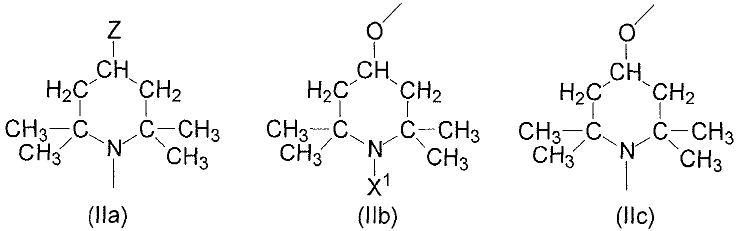 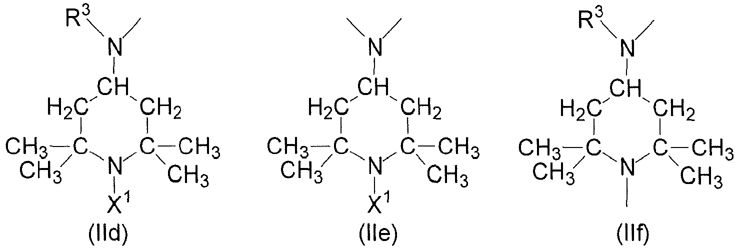
wobei Z und R³ die dafür angegebene Bedeutung haben und
X¹ gleich oder verschieden sein kann und ein Wasserstoffatom einen Rest R³, einen Rest OR³ oder einen Rest C(=O)R³ darstellt.

Bei den erfindungsgemäß eingesetzten HALS-Stabilisatoren (B) handelt es sich vorzugsweise um Stabilisatoren (B1), (B2) oder (B3), bei denen sämtliche funktionellen Gruppen der Formel (II) einer der Formeln (IIa), (IIb), (IIc), (IId), (IIe) oder (IIf) entsprechen.

In einer Ausführungsform handelt es sich bei dem erfindungsgemäß eingesetzten Stabilisator (B) um Stabilisator (B3), der mindestens zwei funktionelle Gruppen ausgewählt aus den Formeln (IIa) bis (IIf) und mindestens eine funktionelle Gruppe mit einer 2,6-Di-*t*-Butylphenolstruktur aufweist. Ein Beispiel für einen entsprechenden Stabilisator (B3) ist Tinuvin® 144 der BASF SE (D-Ludwigshafen).

Bevorzugt handelt es sich bei dem erfindungsgemäßen Stabilisator (B) um Mischungen (B1) oder organische Verbindungen (B2).

Bevorzugt handelt es sich bei den organischen Verbindungen (B2) um solche, die mindestens 4, insbesondere mindestens 6, funktionelle Gruppen der Formel (II), bevorzugt ausgewählt aus den Formeln (IIa) bis (IIf), enthalten.

Bevorzugt handelt es sich bei den Mischungen verschiedener organischer Verbindungen (B1) um solche, die pro Molekül im Mittel mindestens 3, insbesondere mindestens 4, funktionelle Gruppen der Formel (II), bevorzugt ausgewählt aus den Formeln (IIa) bis (IIf), aufweisen.

Die Stabilisator-Mischungen (B1) weisen vorzugsweise mittlere Molmassen (Mₙ) von mindestens 1000 g/mol, besonders bevorzugt von mindestens 2000 g/mol, insbesondere von mindestens 2500 g/mol, auf.

Die Stabilisatoren (B2) weisen vorzugsweise Molmassen bzw. mittlere Molmassen (Mₙ) von mindestens 1000 g/mol, besonders bevorzugt von mindestens 2000 g/mol, insbesondere von mindestens 2500 g/mol, auf.

Bevorzugt enthalten die erfindungsgemäß eingesetzten Stabilisatoren (B1) ausschließlich oder zum Teil funktionelle Gruppen der Formeln (IIc) oder (IIe). Besonders bevorzugt enthalten die erfindungsgemäß eingesetzten Stabilisatoren (B1) ausschließlich funktionelle Gruppen der Formeln (IIc) oder (IIe).

Bevorzugt enthalten die erfindungsgemäß eingesetzten Stabilisatoren (B2) ausschließlich oder zum Teil funktionelle Gruppen der Formeln (IIc) oder (IIe). Besonders bevorzugt enthalten die erfindungsgemäß eingesetzten Stabilisatoren (B2) ausschließlich funktionelle Gruppen der Formeln (IIc) oder (IIe).

Die erfindungsgemäß eingesetzten Stabilisatoren (B1), (B2) und (B3) weisen neben den funktionellen Gruppen der Formel (II), bevorzugt ausgewählt aus den Formeln (IIa) bis (IIf), sowie gegebenenfalls den gegebenenfalls substituierten Hydroxyphenylgruppen weitere Strukturelemente auf. Dabei kann es sich um beliebige organische Strukturen handeln, die vorzugsweise aus Bausteinen, ausgewählt aus Kohlenstoff-, Wasserstoff-, Sauerstoff- und Stickstoffatomen, bestehen. Besonders bevorzugte Strukturelemente stellen dabei Alkylketten, Arylgruppen, Estergruppen, substituierte und unsubstituierte Aminfunktionen, Ethergruppen, stickstoffhaltige Aromaten wie 1,3,5-Triazine dar, insbesondere Alkylketten, Estergruppen, substituierte und unsubstituierte Aminfunktionen, 1,3,5-Triazine. Diese Strukturelemente und die funktionellen Gruppen, also Gruppen der Formel (II) sowie gegebenenfalls substituierte Hydroxyphenylgruppen, können dabei in jeder beliebigen Anordnung durch chemische Bindungen miteinander verbunden sein.

Beispiele für erfindungsgemäß besonders bevorzugte Stabilisatoren (B2) und (B1) sind kommerziell erhältliche Produkte wie Tinuvin® 622, chimassorb® 944, Chimassorb® 119 FDL oder Chimassorb® 2020 der BASF SE (D-Ludwigshafen).

In einer insbesondere bevorzugten Ausführung enthalten die erfindungsgemäß eingesetzten Stabilisatoren (B2) oder (B1) neben den funktionellen Gruppen der Formel (II), bevorzugt ausgewählt aus der Formeln (IIa) bis (IIf), besonders bevorzugt Formeln (IIc) oder (IIe), auch noch mindestens eine Struktureinheit, die UV-absorbierende Eigenschaften aufweist, insbesondere eine Struktureinheit mit einer Benzophenon-, einer Oxalanilid-, einer Benzotriazol- oder einer Triazin-Struktur, wobei die Triazin-Struktur als Struktureinheit mit UV-absorbierenden Eigenschaften besonders bevorzugt wird.

Beispiele für diese insbesondere bevorzugten Stabilisatoren (B1) und (B2) sind die Produkte Chimassorb® 944, Chimassorb® 119 FDL oder Chimassorb® 2020 der BASF SE (D-Ludwigshafen) .

Die erfindungsgemäßen Beschichtungszusammensetzungen (BS) enthalten vorzugsweise mindestens 0,1 Gewichtsteile, bevorzugt mindestens 0,5 Gewichtsteile, besonders bevorzugt mindestens 1,0 Gewichtsteile, insbesondere mindestens 2,0 Gewichtsteile, Komponente (B), jeweils bezogen auf 100 Gewichtsteile der Komponente (A). Jeweils bezogen auf 100 Gewichtsteile der Komponente (A), enthalten die erfindungsgemäßen Beschichtungszusammensetzungen (BS) vorzugsweise höchstens 30 Gewichtsteile, bevorzugt höchstens 25 Gewichtsteile, besonders bevorzugt höchstens 20 Gewichtsteile, insbesondere höchstens 15 Gewichtsteile, Komponente (B).

Der Gesamtanteil der Komponenten (A) und (B) in der erfindungsgemäßen Masse (BS) beträgt mindestens 8 Gew.-%, bevorzugt mindestens 13 Gew.-%.

In einer bevorzugten Ausführung der Erfindung enthalten die erfindungsgemäßen Beschichtungszusammensetzungen (BS) neben den Komponenten (A) und (B) noch mindestens eine weitere Komponente.

Vorzugsweise enthalten die erfindungsgemäßen Massen (BS) zusätzlich zu den Komponenten (A) und (B) mindestens eine weitere Komponente ausgewählt aus Reaktivverdünnern (C), Siliconharzen (D) und nicht reaktiven Weichmachern (E), besonders bevorzugt mindestens eine weitere ausgewählt aus Komponente (C) oder (D). Insbesondere enthalten die erfindungsgemäßen Massen (BS) zusätzlich zu den Komponenten (A) und (B) Reaktivverdünner (C).

Bei der erfindungsgemäß gegebenenfalls eingesetzten Komponente (C) handelt es sich um Reaktivverdünner der Formel

R⁷-SiR⁵_{c}(OR⁶)_{3-c} (III),

worin
- R⁵: gleich oder verschieden sein kann und einen einwertigen, gegebenenfalls substituierten Kohlenwasserstoffrest darstellt,
- R⁶: gleich oder verschieden sein kann und Wasserstoffatom oder einen einwertigen, gegebenenfalls substituierten Kohlenwasserstoffrest darstellt,
- R⁷: eine Arylgruppe oder eine lineare, verzweigte oder cyclische Alkylgruppe oder Alkenylgruppe mit 6 bis 40 Kohlenstoffatomen bedeutet, in der einzelne Wasserstoffatome gegebenenfalls durch organische Reste substituiert sind, wobei, falls R⁷ für eine lineare, verzweigte oder cyclischen Alkylgruppe oder Alkenylgruppe steht, die Kohlenstoffkette gegebenenfalls durch Sauerstoffatome unterbrochen sein kann, und
- c: 0, 1 oder 2, bevorzugt 0 oder 1, besonders bevorzugt 0 ist.

Rest R⁵ weist dabei die gleichen bevorzugten und besonders bevorzugten Bedeutungen auf, wie sie für den Rest R beschrieben sind.

Rest R⁶ weist die gleichen bevorzugten und besonders bevorzugten Bedeutungen auf wie sie für den Rest R² beschrieben sind.

Rest R⁷ steht vorzugsweise für eine gegebenenfalls substituierte lineare oder verzweigte Alkylgruppe mit 8 bis 40 Kohlenstoffatomen, in der die Kohlenstoffkette gegebenenfalls durch Sauerstoffatome unterbrochen sein kann. Besonders bevorzugt handelt es sich bei Rest R⁷ um einen linearen oder verzweigten Alkylrest mit 8 bis 20 Kohlenstoffatomen.

Insbesondere bevorzugte Beispiele für Reste R⁷ stellen der Isooctyl-, n-Octyl-, n-Decyl-, n-Dodecyl-, n-Tetradecyl- und n-Hexadecylreste dar, ganz besonders bevorzugt n-Hexadecylreste.

Beispiele für erfindungsgemäß gegebenenfalls eingesetzte Reaktivverdünner (C) sind Isooctyltrimethoxysilan, Isooctyltriethoxysilan, n-Octyltrimethoxysilan, n-Octyltrimethoxysilan, n-Decyltrimethoxysilan, n-Decyltriethoxysilan, n-Dodecyltrimethoxysiloan, n-Dodecyltriethoxysilan, n-Tetradecyltrimethoxysilan, n-Tetradecyltriethoxysilan, n-Hexadecyltrimethoxysilan, n-Hexadecyltriethoxysilan sowie n-Octadecyltriethoxysilan.

Bei den erfindungsgemäß gegebenenfalls eingesetzten Reaktivverdünnern (C) handelt es sich um handelsübliche Produkte oder können nach in der Siliciumchemie gängigen Methoden hergestellt werden.

Sofern die erfindungsgemäßen Beschichtungszusammensetzungen (BS) Komponente (C) enthalten, handelt es sich um Mengen von bevorzugt 10 bis 300 Gewichtsteilen, besonders bevorzugt 25 bis 200 Gewichtsteilen, insbesondere 50 bis 150 Gewichtsteilen, jeweils bezogen auf 100 Gewichtsteile der Komponente (A) .

Bei der erfindungsgemäß gegebenenfalls eingesetzten Komponente (D) handelt es sich um ein oder mehrere Siliconharze enthaltend Einheiten der Formel

R⁸_{d}(R⁹O)ₑR¹⁰_{f}SiO_{(4-d-e-f)/2} (IV),

wobei
- R⁸: gleich oder verschieden sein kann und Wasserstoffatom, einen einwertigen, SiC-gebundenen, gegebenenfalls substituierten, aliphatischen Kohlenwasserstoffrest oder einen zweiwertigen, gegebenenfalls substituierten, aliphatischen Kohlenwasserstoffrest, der zwei Einheiten der Formel (IV) verbrückt, bedeutet,
- R⁹: gleich oder verschieden sein kann und Wasserstoffatom oder einen einwertigen, gegebenenfalls substituierten Kohlenwasserstoffrest bedeutet,
- R¹⁰: gleich oder verschieden sein kann und einen einwertigen, SiC-gebundenen, gegebenenfalls substituierten, aromatischen Kohlenwasserstoffrest bedeutet,
- d: 0, 1, 2 oder 3 ist,
- e: 0, 1, 2 oder 3, bevorzugt 0, 1 oder 2, besonders bevorzugt 0 oder 1, ist und
- f: 0, 1 oder 2, bevorzugt 0 oder 1, ist,
mit der Maßgabe, dass die Summe aus d+e+f kleiner oder gleich 3 ist und in mindestens 40 % der Einheiten der Formel (IV) die Summe d+f gleich 0 oder 1 ist.

Komponente (D) besteht vorzugsweise zu mindestens 90 Gew.-% aus Einheiten der Formel (IV). Besonders bevorzugt besteht Komponente (D) ausschließlich aus Einheiten der Formel (IV).

Beispiele für Reste R⁸ sind die oben für R angegebenen aliphatischen Reste. Es kann sich bei Rest R⁸ aber auch um zweiwertige aliphatische Reste handeln, die zwei Silylgruppen der Formel (IV) miteinander verbinden, wie z.B. Alkylenreste mit 1 bis 10 Kohlenstoffatomen, wie etwa Methylen-, Ethylen-, Propylen- oder Butylenreste. Ein besonders gängiges Beispiel für einen zweiwertigen aliphatischen Rest stellt der Ethylenrest dar.

Bevorzugt handelt es sich bei Rest R⁸ jedoch um gegebenenfalls mit Halogenatomen substituierte, einwertige SiC-gebundene aliphatische Kohlenwasserstoffreste mit 1 bis 18 Kohlenstoffatomen, besonders bevorzugt um aliphatische Kohlenwasserstoffreste mit 1 bis 8 Kohlenstoffatomen, wie etwa Methyl-, Ethyl-, Propyl-, Butyl-, n-Octyl- oder i-Octylreste, insbesondere um den i-Octyl- oder Methylrest, wobei der Methylrest ganz besonders bevorzugt wird.

Beispiele für Rest R⁹ sind Wasserstoffatom oder die für Rest R angegebenen Beispiele.

Bevorzugt handelt es sich bei Rest R⁹ um Wasserstoffatom oder gegebenenfalls mit Halogenatomen substituierte Alkylreste mit 1 bis 10 Kohlenstoffatomen, besonders bevorzugt um Alkylreste mit 1 bis 4 Kohlenstoffatomen, insbesondere um den Methyl- oder Ethylrest.

Beispiele für Reste R¹⁰ sind die oben für R angegebenen aromatischen Reste.

Bevorzugt handelt es sich bei Rest R¹⁰ um gegebenenfalls mit Halogenatomen substituierte, SiC-gebundene aromatische Kohlenwasserstoffreste mit 1 bis 18 Kohlenstoffatomen, wie z.B. Ethylphenyl-, Toluyl-, Xylyl-, Chlorphenyl-, Naphthyl- oder Styrylreste, besonders bevorzugt um den Phenylrest.

Bevorzugt werden als Komponente (D) Siliconharze eingesetzt, in denen mindestens 90% aller Reste R⁸ für n-Octyl-, i-Octyl- oder Methylrest stehen, wobei besonders bevorzugt mindestens 90% aller Reste R⁸ für Methylrest stehen.

Bevorzugt werden als Komponente (D) Siliconharze eingesetzt, in denen mindestens 90% aller Reste R⁹ für Methyl-, Ethyl-, Propyl- oder Isopropylrest stehen.

Bevorzugt werden als Komponente (D) Siliconharze eingesetzt, in denen mindestens 90% aller Reste R¹⁰ für Phenylrest stehen.

Bei den erfindungsgemäß gegebenenfalls eingesetzten Siliconharzen (D) handelt es sich bevorzugt um solche, die mindestens 20%, besonders bevorzugt mindestens 40%, Einheiten der Formel (IV) aufweisen, in denen d gleich 0 ist, jeweils bezogen auf die Gesamtzahl an Einheiten der Formel (IV).

Bei den erfindungsgemäß gegebenenfalls eingesetzten Siliconharzen (D) handelt es sich bevorzugt um solche, die, jeweils bezogen auf die Gesamtzahl an Einheiten der Formel (IV), mindestens 50%, besonders bevorzugt mindestens 70%, Einheiten der Formel (IV) aufweisen, in denen e für den Wert 0 oder 1 steht.

Bei den erfindungsgemäß gegebenenfalls eingesetzten Siliconharzen (D) handelt es sich bevorzugt um solche, die, jeweils bezogen auf die Gesamtzahl an Einheiten der Formel (IV), mindestens 20%, besonders bevorzugt mindestens 40%, insbesondere mindestens 50%, Einheiten der Formel (IV) aufweisen, in denen f für den Wert 1 steht.

Bei den erfindungsgemäß gegebenenfalls eingesetzten Siliconharzen (D) handelt es sich besonders bevorzugt um solche, die ausschließlich Einheiten der Formel (IV) aufweisen, in denen f gleich 1 ist.

Bei den erfindungsgemäß gegebenenfalls eingesetzten Siliconharzen (D) handelt es sich besonders bevorzugt um solche, die, jeweils bezogen auf die Gesamtzahl an Einheiten der Formel (IV), mindestens 20%, besonders bevorzugt mindestens 40%, insbesondere mindestens 50%, Einheiten der Formel (IV) aufweisen, in denen f für den Wert 1 und d für den Wert 0 stehen.

Bei den erfindungsgemäß gegebenenfalls eingesetzten Siliconharzen (D) handelt es sich bevorzugt um solche, die, jeweils bezogen auf die Gesamtzahl an Einheiten der Formel (IV), mindestens 50%, bevorzugt mindestens 60%, besonders bevorzugt mindestens 70%, Einheiten der Formel (IV) aufweisen, in denen die Summe d+f gleich 0 oder 1 ist.

Beispiele für die erfindungsgemäß gegebenenfalls eingesetzten Siliconharze (D) sind Organopolysiloxanharze, die im Wesentlichen, vorzugsweise ausschließlich, aus Einheiten bestehen, ausgewählt aus (Q)-Einheiten der Formeln SiO_{4/2}, Si(OR⁹)O_{3/2}, Si(OR⁹)₂O_{2/2} und Si (OR⁹)₃O_{1/2}, (T) -Einheiten der Formeln PhSiO_{3/2}, PhSi(OR⁹)O_{2/2}, PhSi (OR⁹)₂O_{1/2}, MeSiO_{3/2}, Me-Si(OR⁹)O_{2/2}, MeSi(OR⁹)₂O_{1/2}, i-OctSiO_{3/2}, i-OctSi(OR⁹)O_{2/2}, i-OctSi(OR⁹)₂O_{1/2}, n-OctSiO_{3/2}, n-OctSi(OR⁹)O_{2/2} und n-OctSi (OR⁹)₂O_{1/2}, (D) -Einheiten der Formeln Me₂SiO_{2/2} und Me₂Si(OR⁹)O_{1/2} sowie (M) -Einheiten der Formel Me₃SiO_{1/2}, wobei Me für Methylrest, Ph für Phenylrest, n-Oct für n-Octylrest und i-Oct für Isooctylrest steht und R⁹ die oben genannte Bedeutung aufweist, wobei das Harz pro Mol (T)-Einheiten bevorzugt 0-2 Mol (Q)-Einheiten, 0-2 Mol (D)-Einheiten und 0-2 Mol (M)-Einheiten aufweist.

Bevorzugte Beispiele für die erfindungsgemäß gegebenenfalls eingesetzten Siliconharze (D) sind Organopolysiloxanharze, die im Wesentlichen, vorzugsweise ausschließlich, aus Einheiten bestehen, ausgewählt aus T-Einheiten der Formeln PhSiO_{3/2}, PhSi (OR⁹)O_{2/2} und PhSi(OR⁹)₂O_{1/2} sowie T-Einheiten der Formeln MeSiO_{3/2}, MeSi(OR⁹)O_{2/2} und MeSi (OR⁹)₂O_{1/2}, wobei Me für Methylrest, Ph für Phenylrest und R⁹ für Wasserstoffatom, Methyl- oder Ethylrest stehen.

Weitere bevorzugte Beispiele für die erfindungsgemäß gegebenenfalls eingesetzten Siliconharze (D) sind Organopolysiloxanharze, die im Wesentlichen, vorzugsweise ausschließlich, aus Einheiten bestehen, ausgewählt aus T-Einheiten der Formeln PhSiO_{3/2}, PhSi (OR⁹)O_{2/2} und PhSi(OR⁹)₂O_{1/2}, T-Einheiten der Formeln MeSiO_{3/2}, MeSi (OR⁹)O_{2/2} und MeSi (OR⁹)₂O_{1/2} sowie D-Einheiten der Formeln Me₂SiO_{2/2} und Me₂Si(OR⁹)O_{1/2}, wobei Me für Methylrest, Ph für Phenylrest und R⁹ für Wasserstoffatom, Methyl- oder Ethylrest stehen, mit einem molaren Verhältnis von Phenylsilicon- zu Methylsilicon-Einheiten von 0,5 bis 4,0. Der Gehalt an D-Einheiten in diesen Siliconharzen liegt vorzugsweise unter 10 Gew.-%.

Besonders bevorzugte Beispiele für die erfindungsgemäß gegebenenfalls eingesetzten Siliconharze (D) sind Organopolysiloxanharze, die zu 80%, vorzugsweise zu 90%, insbesondere ausschließlich, aus T-Einheiten der Formeln PhSiO_{3/2}, PhSi (OR⁹)O_{2/2} und PhSi (OR⁹)₂O_{1/2} bestehen, wobei Ph für Phenylrest und R⁹ für Wasserstoffatom, Methyl- oder Ethylrest stehen, jeweils bezogen auf die Gesamtzahl an Einheiten.

Vorzugsweise besitzen die erfindungsgemäß gegebenenfalls eingesetzten Siliconharze (D) eine mittlere Molmasse (Zahlenmittel) Mₙ von mindestens 400 g/mol und besonders bevorzugt von mindestens 600 g/mol. Die mittlere Molmasse Mₙ liegt vorzugsweise bei höchstens 400 000 g/mol, besonders bevorzugt bei höchstens 10 000 g/mol, insbesondere bei höchstens 3 000 g/mol.

Die erfindungsgemäß gegebenenfalls eingesetzten Siliconharze (D) können bei 23°C und 1000 hPa sowohl fest als auch flüssig sein, wobei Siliconharze (D) bevorzugt flüssig sind. Vorzugsweise besitzen die Siliconharze (D) bei 23°C eine Viskosität von 10 bis 100 000 mPas, vorzugsweise von 50 bis 50 000 mPas, insbesondere von 100 bis 20 000 mPas.

Die erfindungsgemäß gegebenenfalls eingesetzten Siliconharze (D) besitzen vorzugsweise eine Polydispersität (M_{w}/Mₙ) von maximal 5, bevorzugt von maximal 3.

Die massenmittlere Molmasse M_{w} wird dabei ebenso wie die zahlenmittlere Molmassen Mₙ mittels Size Exclusion Chromatography (SEC) gegen Polystyrol-Standard, in THF, bei 60 °C, Flow Rate 1,2 ml/min und Detektion mit RI (Brechungsindex-Detektor) auf einem Säulenset Styragel HR3-HR4-HR5-HR5 von Waters Corp. USA mit einem Injektionsvolumen von 100 µl bestimmt.

Die Siliconharze (D) können sowohl in reiner Form als auch in Form einer Mischung mit einem geeigneten Lösungsmittel (DL) eingesetzt werden.

Als Lösungsmittel (DL) können dabei sämtliche bei Raumtemperatur gegenüber den Komponenten (A) bis (D) nicht reaktive Verbindungen mit einem Siedepunkt <250 °C bei 1013 mbar eingesetzt werden.

Beispiele für gegebenenfalls eingesetzte Lösungsmittel (DL) sind Ether, wie z.B. Diethylether, Methyl-t-butylether, Etherderivate des Glycols und THF; Ester, wie z.B. Ethylacetat, Butylacetat und Glycolester; aliphatische Kohlenwasserstoffe, wie z.B. Pentan, Cyclopentan, Hexan, Cyclohexan, Heptan, Octan oder auch längerkettige verzweigte und unverzweigte Alkane; Ketone, wie z.B. Aceton und Methylethylketon; Aromaten, wie z.B. Toluol, Xylol, Ethylbenzol und Chlorbenzol; oder auch Alkohole, wie z.B. Methanol, Ethanol, Glycol, Propanol, iso-Propanol, Glycerin, Butanol, isoButanol und t-Butanol.

Falls Komponente (D) eingesetzt wird, werden in einer besonders bevorzugten Ausführung der Erfindung Siliconharze eingesetzt, die mit Ausnahme von Alkoholen R⁹OH weniger als 0,1 Gew.-%, bevorzugt weniger als 0,05 Gew.-%, besonders bevorzugt weniger als 0,02 Gew.-%, insbesondere weniger als 0,01 Gew.-%, Lösungsmittel (DL) enthalten, wobei R⁹ die oben genannte Bedeutung aufweist.

Falls Komponente (D) eingesetzt wird, werden in einer ganz besonders bevorzugten Ausführung der Erfindung Siliconharze eingesetzt, die mit Ausnahme von Alkoholen R⁹OH überhaupt keine Lösungsmittel (DL) enthalten, wobei R⁹ die oben genannte Bedeutung aufweist und Alkohole R⁹OH in Mengen von bevorzugt maximal 5 Gew.-%, besonders bevorzugt 0 bis 1 Gew.-%, in der Regel herstellungsbedingt, enthalten sind.

Bei den erfindungsgemäß gegebenenfalls eingesetzten Siliconharzen (D) handelt es sich um handelsübliche Produkte oder können nach in der Siliciumchemie gängigen Methoden hergestellt werden. Kommerziell erhältliche Beispiele sind die Harze SILRES® SY 231, SILRES® IC 231, SILRES® IC 368, SILRES® IC 678 oder SILRES® BS 1268, GENIOSIL® LX 678 oder GENIOSIL® LX 368 der Wacker Chemie AG, D-München.

Sofern die erfindungsgemäßen Beschichtungszusammensetzungen (BS) Komponente (D) enthalten, handelt es sich um Mengen von bevorzugt 25 bis 500 Gewichtsteilen, besonders bevorzugt 50 bis 300 Gewichtsteilen, insbesondere 80 bis 200 Gewichtsteilen, jeweils bezogen auf 100 Gewichtsteile der Komponente (A) .

Bei der erfindungsgemäß gegebenenfalls eingesetzten Komponente (E) handelt es sich um ein oder mehrere nicht reaktiven Weichmacher. Als nicht reaktive Weichmacher (E) im Rahmen der vorliegenden Erfindung gelten sämtliche organischen Verbindungen, die bei Temperaturen <80°C bei einem Druck von 1013 hPa weder mit Wasser noch mit den Komponenten (A), (B), (C) oder (D) reagieren, bei 20°C und 1013 hPa flüssig sind und einen Siedepunkt >250°C bei 1013 hPa aufweisen. Bevorzugt sind nicht reaktive Weichmacher (E) ausgewählt aus den Stoffgruppen der
- vollständig veresterten aromatischen oder aliphatischen Carbonsäuren,
- vollständig veresterter Derivate der Phosphorsäure,
- vollständig veresterten Derivaten Sulfonsäuren,
- verzweigten oder unverzweigten gesättigten Kohlenwasserstoffen,
- Polystyrole,
- Polybutadiene,
- Polyisobutylene,
- Polyester und
- Polyether.

Beispiele für Carbonsäureester-Weichmacher (E) sind Phthalsäureester, wie z.B. Dioctylphthalat, Diisooctylphthalat und Diundecylphthalat; perhydrierte Phthalsäureester, wie z.B. 1,2-Cyclohexandicarbonsäurediisononylester und 1,2-Cyclohexandicarbonsäuredioctylester; Adipinsäureester, wie z.B. Dioctyladipat; Benzoesäureester; Ester der Trimellitsäure, Glycolester; Ester gesättigter Alkandiole, wie z.B. 2,2,4-Trimethyl-1,3-pentandiolmonoisobutyrate und 2,2,4-Trimethyl-1,3-pentandioldiisobutyrate.

Beispiele für Polyether-Weichmacher (E) sind z.B. Polyethylenglycole, Poly-THF und Polypropylenglycole mit Molmassen von vorzugsweise 200 bis 22 000 g/mol.

Bevorzugt werden Weichmacher (E) mit Molmassen bzw. im Falle polymerer Weichmacher mittlerer Molmassen Mₙ von größer 200 g/mol, besonders bevorzugt von größer 500 g/mol, insbesondere von größer 900 g/mol, eingesetzt. Vorzugsweise besitzen sie Molmassen bzw. mittlere Molmassen Mₙ von maximal 20 000 g/mol, besonders bevorzugt von maximal 10 000 g/mol, insbesondere höchstens 4 000 g/mol.

Falls Komponente (E) eingesetzt wird, handelt es sich bevorzugt um phthalsäurefreie Weichmacher, wie perhydrierte Phthalsäureester, Ester der Trimellitsäure, Polyester oder Polyether.

Sofern die erfindungsgemäßen Beschichtungszusammensetzungen (BS) Komponente (E) enthalten, handelt es sich um Mengen von bevorzugt 10 bis 300 Gewichtsteilen, besonders bevorzugt 40 bis 250 Gewichtsteilen, insbesondere 70 bis 200 Gewichtsteilen, jeweils bezogen auf 100 Gewichtsteile der Komponente (A).

Zusätzlich zu den eingesetzten Komponenten (A) und (B) sowie gegebenenfalls (C) bis (E) können die erfindungsgemäßen Beschichtungszusammensetzungen (BS) alle weiteren Stoffe enthalten, die auch bisher in silanvernetzbaren Massen eingesetzt wurden und die unterschiedlich sind zu Komponenten (A) bis (E), wie z.B. Stickstoff aufweisende Organosiliciumverbindungen (F), Füllstoffe (G), Katalysatoren (H), Haftvermittler (I), Wasserfänger (J), Additive (K) und Zuschlagstoffe (L).

Bevorzugt handelt es sich bei Komponente (F) um Organosiliciumverbindungen enthaltend Einheiten der Formel

DₕSi(OR¹¹)_{g}R¹²ᵢO_{(4-g-h-i)/2} (V),

worin
D gleich oder verschieden sein kann und einen einwertigen, SiC-gebundenen Rest mit basischem Stickstoff bedeutet,
R¹¹ gleich oder verschieden sein kann und Wasserstoffatom oder gegebenenfalls substituierte Kohlenwasserstoffreste bedeutet,
R¹² gleich oder verschieden sein kann und einen einwertigen, gegebenenfalls substituierten SiC-gebundenen, stickstofffreien organischen Rest bedeutet,
i 0, 1, 2 oder 3, bevorzugt 1 oder 0, ist,
g 0, 1, 2 oder 3, bevorzugt 1, 2 oder 3, besonders bevorzugt 2 oder 3, ist und
h 0, 1, 2, 3 oder 4, bevorzugt 1, ist,
mit der Maßgabe, dass die Summe aus g+h+i kleiner oder gleich 4 ist und pro Molekül mindestens ein Rest D anwesend ist.

In einer bevorzugten Ausführung der Erfindung enthalten die erfindungsgemäßen Beschichtungszusammensetzungen (BS) neben den Komponenten (A), (B) sowie gegebenenfalls (C) bis (E) auch noch mindestens eine weitere Komponente (F).

Bei den erfindungsgemäß gegebenenfalls eingesetzten Organosiliciumverbindungen (F) kann es sich sowohl um Silane handeln, d.h. Verbindungen der Formel (V) mit g+h+i=4, als auch um Siloxane, d.h. Verbindungen enthaltend Einheiten der Formel (V) mit g+h+i≤3, wobei es sich bevorzugt um Silane handelt.

Beispiele für gegebenenfalls substituierte Kohlenwasserstoffreste R¹¹ sind die für Rest R angegebenen Beispiele.

Bei den Resten R¹¹ handelt es sich vorzugsweise um Wasserstoffatom und gegebenenfalls mit Halogenatomen substituierte Kohlenwasserstoffreste mit 1 bis 18 Kohlenstoffatomen, besonders bevorzugt um Wasserstoffatom und Kohlenwasserstoffreste mit 1 bis 10 Kohlenstoffatomen, insbesondere um Methyl- und Ethylrest.

Beispiele für Rest R¹² sind die für R angegebenen Beispiele.

Bei Rest R¹² handelt es sich vorzugsweise um gegebenenfalls mit Halogenatomen substituierte Kohlenwasserstoffreste mit 1 bis 18 Kohlenstoffatomen, besonders bevorzugt um Kohlenwasserstoffreste mit 1 bis 5 Kohlenstoffatomen, insbesondere um den Methylrest.

Beispiele für Reste D sind Reste der Formeln H₂N(CH₂)₃-, H₂N(CH₂)₂NH(CH₂)₃-, H₂N(CH₂)₂NH(CH₂)₂NH(CH₂)₃-, H₃CNH(CH₂)₃-, C₂H₅NH(CH₂)₃-, C₃H₇NH(CH₂)₃-, C₄H₉NH(CH₂)₃-, C₅H₁₁NH(CH₂)₃-, C₆H₁₃NH(CH₂)₃-, C₇H₁₅NH(CH₂)₃-, H₂N(CH₂)₄-, H₂N-CH₂-CH(CH3)-CH₂-, H₂N(CH₂)₅-, cyclo-C₅H₉NH(CH₂)₃-, cyclo-C₆H₁₁NH(CH₂)₃-, Phenyl-NH(CH₂)₃-, (CH₃)₂N(CH₂)₃-, (C₂H₅)₂N(CH₂)₃-, (C₃H₇)₂NH(CH₂)₃-, (C₄H₉)₂NH(CH₂)₃-, (C₅H₁₁)₂NH(CH₂)₃-, (C₆H₁₃)₂NH(CH₂)₃-, (C₇H₁₅)₂NH(CH₂)₃-, H₂N(CH₂)-, H₂N(CH₂)₂NH(CH₂)-, H₂N(CH₂)₂NH(CH₂)₂NH(CH₂)-, H₃CNH(CH₂)-, C₂H₅NH(CH₂)-, C₃H₇NH(CH₂)-, C₄H₉NH(CH₂)-, C₅H₁₁NH(CH₂)-, C₆H₁₃NH(CH₂)-, C₇H₁₅NH(CH₂)-, cyclo-C₅H₉NH(CH₂)-, cyclo-C₆H₁₁NH(CH₂)-, Phenyl-NH(CH₂)-, (CH₃)₂N(CH₂)-, (C₂H₅)₂N(CH₂)-, (C₃H₇)₂NH(CH₂)-, (C₄H₉)₂NH(CH₂)(C₅H₁₁)₂NH(CH₂)-, (C₆H₁₃)₂NH(CH₂)-, (C₇H₁₅)₂NH(CH₂)-, (CH₃O)₃Si(CH₂)₃NH(CH₂)₃-, (C₂H₅O)₃Si(CH₂)₃NH(CH₂)₃-, (CH₃O)₂(CH₃)Si (CH₂)₃NH(CH₂)₃- und (C₂H₅O)₂(CH₃)Si(CH₂)₃NH(CH₂)₃- sowie Umsetzungsprodukte der obengenannten primären Aminogruppen mit Verbindungen, die gegenüber primären Aminogruppen reaktive Doppelbindungen oder Epoxidgruppen enthalten.

Bevorzugt handelt es sich bei Rest D um den H₂N(CH₂)₃-, H₂N(CH₂)₂NH(CH₂)₃- oder cyclo-C₆H₁₁NH(CH₂)₃-Rest.

Beispiele für die erfindungsgemäß gegebenenfalls eingesetzten Silane der Formel (V) sind H₂N(CH₂)₃-Si(OCH₃)₃, H₂N(CH₂)₃-Si(OC₂H₅)₃, H₂N(CH₂)₃-Si(OCH₃)₂CH₃, H₂N(CH₂)₃-Si(OC₂H₅)₂CH₃, H₂N(CH₂)₂NH(CH₂)₃-Si(OCH₃)₃, H₂N(CH₂)₂NH(CH₂)₃-Si(OC₂H₅)₃, H₂N(CH₂)₂NH(CH₂)₃-Si(OCH₃)₂CH₃, H₂N(CH₂)₂NH(CH₂)₃-Si(OC₂H₅)₂CH₃, H₂N(CH₂)₂NH(CH₂)₃-Si(OH)₃, H₂N(CH₂)₂NH(CH₂)₃-Si(OH)₂CH₃, H₂N(CH₂)₂NH(CH₂)₂NH(CH₂)₃-Si(OCH₃)₃, H₂N(CH₂)₂NH(CH₂)₂NH(CH₂)₃-Si(OC₂H₅)₃, cyclo-C₆H₁₁NH(CH₂)₃-Si(OCH₃)₃, cyclo-C₆H₁₁NH(CH₂)₃-Si(OC₂H₅)₃, cyclo-C₆H₁₁NH(CH₂)₃-Si(OCH₃)₂CH₃, cyclo-C₆H₁₁NH(CH₂)₃-Si(OC₂H₅)₂CH₃, cyclo-C₆H₁₁NH(CH₂)₃-Si(OH)₃, cyclo-C₆H₁₁NH(CH₂)₃-Si(OH)₂CH₃, Phenyl-NH(CH₂)3-Si(OCH₃)₃, Phenyl-NH(CH₂)₃-Si(OC₂H₅)₃, Phenyl-NH(CH₂)₃-Si(OCH₃)₂CH₃, Phenyl-NH(CH₂)₃-Si(OC₂H₅)₂CH₃, Phenyl-NH(CH₂)₃-Si(OH)₃, Phenyl-NH(CH₂)₃-Si(OH)₂CH₃, HN((CH₂)₃-Si(OCH₃)₃)₂, HN((CH₂)₃-Si(OC₂H₅)₃)₂HN((CH₂)₃-Si(OCH₃)₂CH₃)₂, HN((CH₂)₃-Si(OC₂H₅)₂CH₃)₂, cyclo-C₆H₁₁NH(CH₂)-Si(OCH₃)₃, cyclo-C₆H₁₁NH(CH₂)-Si(OC₂H₅)₃, cyclo-C₆H₁₁NH(CH₂)-Si(OCH₃)₂CH₃, cyclo-C₆H₁₁NH(CH₂)-Si(OC₂H₅)₂CH₃, cyclo-C₆H₁₁NH (CH₂)-Si(OH)₃, cyclo-C₆H₁₁NH(CH₂)-Si(OH)₂CH₃, Phenyl-NH(CH₂)-Si(OCH₃)₃, Phenyl-NH(CH₂)-Si(OC₂H₅)₃, Phenyl-NH(CH₂)-Si(OCH₃)₂CH₃, Phenyl-NH(CH₂)-Si(OC₂H₅)₂CH₃, Phenyl-NH(CH₂)-Si(OH)₃ und Phenyl-NH(CH₂)-Si(OH)₂CH₃ sowie deren Teilhydrolysate, wobei H₂N(CH₂)₂NH(CH₂)₃-Si(OCH₃)₃, H₂N(CH₂)₂NH(CH₂)₃-Si(OC₂H₅)₃, H₂N(CH₂)₂NH(CH₂)₃-Si(OCH₃)₂CH₃, cyclo-C₆H₁₁NH(CH₂)₃-Si(OCH₃)₃, cyclo-C₆H₁₁NH(CH₂)₃-Si(OC₂H₅)₃ und cyclo-C₆H₁₁NH(CH₂)₃-Si(OCH₃)₂CH₃ sowie jeweils deren Teilhydrolysate bevorzugt und H₂N(CH₂)₂NH(CH₂)₃-Si(OCH₃)₃, H₂N(CH₂)₂NH(CH₂)₃-Si(OCH₃)₂CH₃, cyclo-C₆H₁₁NH(CH₂)₃-Si(OCH₃)₃, cyclo-C₆H₁₁NH(CH₂)₃-Si(OCH₃)₂CH₃ sowie jeweils deren Teilhydrolysate besonders bevorzugt sind.

Die erfindungsgemäß gegebenenfalls eingesetzten Organosiliciumverbindungen (F) können in den erfindungsgemäßen Beschichtungszusammensetzungen (BS) auch die Funktion eines Härtungskatalysators oder -cokatalysators übernehmen.

Des Weiteren können die erfindungsgemäß gegebenenfalls eingesetzten Organosiliciumverbindungen (F) als Haftvermittler und/oder als Wasserfänger wirken.

Die erfindungsgemäß gegebenenfalls eingesetzten Organosiliciumverbindungen (F) sind handelsübliche Produkte bzw. nach in der Chemie gängigen Verfahren herstellbar.

Falls die erfindungsgemäßen Beschichtungszusammensetzungen (BS) Komponente (F) enthalten, handelt es sich um Mengen von bevorzugt 0,1 bis 25 Gewichtsteilen, besonders bevorzugt 0,5 bis 15 Gewichtsteilen, jeweils bezogen auf 100 Gewichtsteile Komponente (A). Die erfindungsgemäßen Massen enthalten bevorzugt Komponente (F).

Bei den in den erfindungsgemäßen Beschichtungszusammensetzungen (BS) gegebenenfalls eingesetzten Füllstoffen (G) kann es sich um beliebige, bisher bekannte Füllstoffe handeln.

Beispiele für Füllstoffe (G) sind nicht verstärkende Füllstoffe, also Füllstoffe mit einer BET-Oberfläche von vorzugsweise bis zu 50 m²/g, wie Quarz, Diatomeenerde, Calciumsilikat, Zirkoniumsilikat, Talkum, Kaolin, Zeolithe, Metalloxidpulver, wie Aluminium-, Titan-, Eisen- oder Zinkoxide bzw. deren Mischoxide, Bariumsulfat, Calciumcarbonat, Mischkristalle aus Kaolin und Quarz wie Sillitin V85, Silfit Z 91 oder Aktifit VM der Fa. Hoffmann Mineral (D-Neuburg), Gips, Siliciumnitrid, Siliciumcarbid, Bornitrid, Glas- und Kunststoffpulver, wie Polyacrylnitrilpulver; verstärkende Füllstoffe, also Füllstoffe mit einer BET-Oberfläche von mehr als 50 m²/g, wie pyrogen hergestellte Kieselsäure, gefällte Kieselsäure, gefällte Kreide, Ruß, wie Furnace- und Acetylenruß und Silicium-Aluminium-Mischoxide großer BET-Oberfläche; Aluminiumtrihydroxid, hohlkugelförmiger Füllstoffe, wie keramische Mikrokugel, wie z.B. solche erhältlich unter der Handelsbezeichnung Zeeospheres™ bei der Fa. 3M Deutschland GmbH in D-Neuss, elastische Kunststoffkugeln, wie etwa solche erhältlich unter der Handelsbezeichnung EXPANCEL® bei der Fa. AKZO NOBEL, Expancel in Sundsvall, Schweden, oder Glaskugeln; faserförmige Füllstoffe, wie Asbest sowie Kunststofffasern. Die genannten Füllstoffe können hydrophobiert sein, beispielsweise durch die Behandlung mit Organosilanen bzw. -siloxanen oder mit Stearinsäure oder durch Veretherung von Hydroxylgruppen zu Alkoxygruppen.

Bevorzugt handelt es sich bei den gegebenenfalls eingesetzten Füllstoffen (G) um Calciumcarbonat, Talkum, Aluminiumtrihydroxid oder Kieselsäure, wobei der Einsatz von Aluminiumtrihydroxid besonders bevorzugt wird, da dieser Füllstoff zudem eine brandschutzhemmende Wirkung besitzt. Bevorzugte Calciumcarbonat-Typen sind gemahlen oder gefällt und gegebenenfalls oberflächenbehandelt mit Fettsäuren wie Stearinsäure oder deren Salze. Bei der bevorzugten Kieselsäure handelt es sich bevorzugt um pyrogene Kieselsäure.

Gegebenenfalls eingesetzte Füllstoffe (G) haben einen Feuchtigkeitsgehalt von bevorzugt unter 1 Gew.-%, besonders bevorzugt von unter 0,5 Gew.-%.

Falls die erfindungsgemäßen Beschichtungszusammensetzungen (BS) Füllstoffe (G) enthalten, handelt es sich um Mengen von vorzugsweise 10 bis 1000 Gewichtsteilen, besonders bevorzugt 50 bis 500 Gewichtsteilen, insbesondere 70 bis 300 Gewichtsteilen, jeweils bezogen auf 100 Gewichtsteile Bestandteil (A). Die erfindungsgemäßen Massen enthalten bevorzugt Füllstoffe (G).

In einer besonderen Ausführung der Erfindung enthalten die erfindungsgemäßen Beschichtungszusammensetzungen (BS) als Füllstoffe (G) eine Kombination aus
a) Kieselsäure, insbesondere pyrogener Kieselsäure, und
b) Calciumcarbonat, Aluminiumtrihydroxid und/oder Talkum.

Falls die erfindungsgemäßen Beschichtungszusammensetzungen (BS) diese besondere Kombination verschiedener Füllstoffe (G) enthalten, enthalten sie vorzugsweise 1 bis 80 Gewichtsteile, besonders bevorzugt 5 bis 40 Gewichtsteile, Kieselsäure, insbesondere pyrogene Kieselsäure, und vorzugsweise 10 bis 500 Gewichtsteile, besonders bevorzugt 50 bis 300 Gewichtsteile, Calciumcarbonat, Aluminiumtrihydroxid, Talkum oder Mischungen aus diesen Materialien, jeweils bezogen auf 100 Gewichtsteile Bestandteil (A).

In einer besonders bevorzugten Ausführung enthalten die erfindungsgemäßen Beschichtungszusammensetzungen (BS) vorzugsweise neben einer der oben genannte bevorzugten Füllstoffkombinationen auch noch Titandioxid in Mengen von 0,1 bis 100 Gewichtsteilen, wobei Mengen von 2 bis 50 Gewichtsteilen besonders und von 1 bis 20 Gewichtsteilen insbesondere bevorzugt werden, jeweils bezogen auf 100 Gewichtsteile Bestandteil (A).
Bei den in den erfindungsgemäßen Beschichtungszusammensetzungen (BS) gegebenenfalls eingesetzten Katalysatoren (H) kann es sich um beliebige, bisher bekannte Katalysatoren für durch Silankondensation härtende Massen handeln.

Beispiele für metallhaltige Härtungskatalysatoren (H) sind organische Titan- und Zinnverbindungen, beispielsweise Titansäureester, wie Tetrabutyltitanat, Tetrapropyltitanat, Tetraisopropyltitanat und Titantetraacetylacetonat; Zinnverbindungen, wie Dibutylzinndilaurat, Dibutylzinnmaleat, Dibutylzinndiacetat, Dibutylzinndioctanoat, Dibutylzinnacetylacetonat, Dibutylzinnoxide, und entsprechende Dioctylzinnverbindungen.

Beispiele für metallfreie Härtungskatalysatoren (H) sind basische Verbindungen, wie Triethylamin, Tributylamin, 1,4-Diazabicyclo[2,2,2]octan, 1,5-Diazabicyclo[4.3.0]non-5-en, 1,8-Diazabicyclo[5.4.0]undec-7-en, N,N-Bis-(N,N-dimethyl-2-aminoethyl)-methylamin, N,N-Dimethylcyclohexylamin, N,N-Dimethylphenylamin und N-Ethylmorpholin.

Ebenfalls als Katalysator (H) können saure Verbindungen eingesetzt werden, wie Phosphorsäure und ihre Ester, Toluolsulfonsäure, Schwefelsäure, Salpetersäure oder auch organische Carbonsäuren, z.B. Essigsäure und Benzoesäure.

Falls die erfindungsgemäßen Beschichtungszusammensetzungen (BS) Katalysatoren (H) enthalten, handelt es sich um Mengen von vorzugsweise 0,01 bis 20 Gewichtsteilen, besonders bevorzugt 0,05 bis 5 Gewichtsteilen, jeweils bezogen auf 100 Gewichtsteile Bestandteil (A).

In einer Ausführung der Erfindung handelt es sich bei den gegebenenfalls eingesetzten Katalysatoren (H) um metallhaltige Härtungskatalysatoren, bevorzugt um zinnhaltige Katalysatoren. Diese Ausführungsform der Erfindung ist insbesondere dann bevorzugt, wenn die Komponente (A) ganz oder zumindest teilweise, d.h. zu mindestens 90% Gew.-%, vorzugsweise zu mindestens 95 Gew.-%, aus Verbindungen der Formel (I) besteht, in denen b ungleich 1 ist.

Bei den erfindungsgemäßen Beschichtungszusammensetzungen (BS) kann vorzugsweise dann auf metallhaltige Katalysatoren (H), und insbesondere auf Zinn enthaltende Katalysatoren, verzichtet werden, wenn die Komponente (A) ganz oder zumindest teilweise, d.h. zu mindestens 10 Gew.-%, vorzugsweise zu mindestens 20 Gew.-%, aus Verbindungen der Formel (I) besteht, in denen b gleich 1 ist und R¹ die Bedeutung von Wasserstoffatom hat. Diese Ausführungsform der Erfindung ohne metall- und insbesondere ohne zinnhaltige Katalysatoren wird besonders bevorzugt.

Bei den in den erfindungsgemäßen Beschichtungszusammensetzungen (BS) gegebenenfalls eingesetzten Haftvermittlern (I) kann es sich um beliebige, bisher für durch Silankondensation härtende Systemen beschriebene Haftvermittler handeln.

Beispiele für Haftvermittler (I) sind Epoxysilane, wie Glycidoxypropyltrimethoxysilane, Glycidoxypropyl-methyldimethoxysilan, Glycidoxypropyltriethoxysilan oder Glycidoxypropyl-methyldiethoxysilan, 2-(3-Triethoxysilylpropyl)-maleinsäureanhydrid, N-(3-Trimethoxysilylpropyl)-harnstoff, N-(3-Triethoxysilylpropyl)-harnstoff, N-(Trimethoxysilylmethyl)-harnstoff, N-(Methyldimethoxysilymethyl)-harnstoff, N-(3-Triethoxysilylmethyl)-harnstoff, N-(3-Methyldiethoxysilylmethyl)harnstoff, O-Methylcarbamatomethyl-methyldimethoxysilan, O-Methylcarbamatomethyl-trimethoxysilan, O-Ethylcarbamatomethyl-methyldiethoxysilan, O-Ethylcarbamatomethyl-triethoxysilan, 3-Methacryloxypropyltrimethoxysilan, Methacryloxymethyl-trimethoxysilan, Methacryloxymethyl-methyldimethoxysilan, Methacryloxymethyltriethoxysilan, Methacryloxymethyl-methyldiethoxysilan, 3-Acryloxypropyl-trimethoxysilan, Acryloxymethyl-trimethoxysilan, Acryloxymethylmethyldimethoxysilane, Acryloxymethyl-triethoxysilan und Acryloxymethyl-methyldiethoxysilan sowie deren Teilkondensate.

Falls die erfindungsgemäßen Beschichtungszusammensetzungen (BS) Haftvermittler (I) enthalten, handelt es sich um Mengen von vorzugsweise 0,5 bis 30 Gewichtsteilen, besonders bevorzugt 1 bis 10 Gewichtsteilen, jeweils bezogen auf 100 Gewichtsteile Beschichtungszusammensetzungen (BS).

Bei den in den erfindungsgemäßen Beschichtungszusammensetzungen (BS) gegebenenfalls eingesetzten Wasserfängern (J) kann es sich um beliebige, für durch Silankondensation härtende Systemen beschriebene Wasserfänger handeln.

Beispiele für Wasserfänger (J) sind Silane wie Vinyltrimethoxysilan, Vinyltriethoxysilan, Vinylmethyldimethoxysilan, Phenyltrimethoxysilan, Phenyltriethoxysilan, Phenylmethyldimethoxysilan, O-Methylcarbamatomethyl-methyldimethoxysilan, O-Methylcarbamatomethyl-trimethoxysilan, O-Ethylcarbamatomethyl-methyldiethoxysilan, O-Ethylcarbamatomethyl-triethoxysilan, und/oder deren Teilkondensate sowie Orthoester, wie 1,1,1-Trimethoxyethan, 1,1,1-Triethoxyethan, Trimethoxymethan und Triethoxymethan.

Falls die erfindungsgemäßen Beschichtungszusammensetzungen (BS) Wasserfänger (J) enthalten, handelt es sich um Mengen von vorzugsweise 0,5 bis 30 Gewichtsteilen, besonders bevorzugt 1 bis 10 Gewichtsteilen, jeweils bezogen auf 100 Gewichtsteile Beschichtungszusammensetzungen (BS). Die erfindungsgemäßen Beschichtungszusammensetzungen (BS) enthalten bevorzugt Wasserfänger (J).

Bei den in den erfindungsgemäßen Beschichtungszusammensetzungen (BS) gegebenenfalls eingesetzten Additiven (K) kann es sich um beliebige, bisher bekannte für silanvernetzende Systeme typische Additive handeln.

Bei den erfindungsgemäß gegebenenfalls eingesetzten Additiven (K) handelt es sich bevorzugt um Antioxidantien, UV-Absorber, Fungizide und Pigmente.

Besonders bevorzugt werden UV-Absorber als Additive (K) eingesetzt, da diese in Kombination mit der erfindungsgemäßen Komponente (B) zu einer zusätzlichen UV-Stabilisierung der erfindungsgemäßen Massen führen. Beispiele für UV-Absorber sind Chimassorb® 82, Chimassorb® 90, Tinuvin® 99, Tinuvin® 101, Tinuvin® 109, Tinuvin® 1130, Tinuvin® 171, Tinuvin® 384, Tinuvin® 900, Tinuvin® 928, Tinuvin® 400, Tinuvin® 405, Tinuvin® 460, Tinuvin® 477, Tinuvin® 471, Tinuvin® 479 oder Tinuvin® 400 der BASF SE (D-Ludwigshafen).

Falls die erfindungsgemäßen Beschichtungszusammensetzungen (BS) Additive (K) enthalten, handelt es sich um Mengen von vorzugsweise 0,01 bis 30 Gewichtsteilen, besonders bevorzugt 0,1 bis 20 Gewichtsteilen, jeweils bezogen auf 100 Gewichtsteile Bestandteil (A). Die erfindungsgemäßen Beschichtungszusammensetzungen (BS) enthalten bevorzugt Additive (K), insbesondere bevorzugt UV-Absorber (K).

Bei den erfindungsgemäß gegebenenfalls eingesetzten Zuschlagsstoffen (L) handelt es sich bevorzugt um Tetraalkoxysilane, z.B. Tetraethoxysilan und/oder deren Teilkondensate, wobei letztere besonders bevorzugt werden, Rheologieadditive, Flammschutzmittel und organische Lösungsmittel.

Bei den Rheologieadditiven (L) handelt es sich bevorzugt um Polyamidwachse, hydrierte Rizinusöle oder Stearate.

Beispiele für organische Lösungsmittel (L) sind die bereits oben als Lösungsmittel (DL) genannten Verbindungen, bevorzugt Alkohole.

Den erfindungsgemäßen Beschichtungszusammensetzungen (BS) werden vorzugsweise keine organischen Lösungsmitteln (L) zugesetzt.

Falls die erfindungsgemäßen Beschichtungszusammensetzungen (BS) eine oder mehrere Komponenten (L) enthalten, handelt es sich jeweils um Mengen von bevorzugt 0,5 bis 200 Gewichtsteilen, besonders bevorzugt 1 bis 100 Gewichtsteilen, insbesondere 2 bis 70 Gewichtsteilen, jeweils bezogen auf 100 Gewichtsteile Komponente (A).

Bei den erfindungsgemäßen Beschichtungszusammensetzungen (BS) handelt es sich bevorzugt um solche enthaltend
(A) 100 Gewichtsteile Verbindungen der Formel (I),
(B) 0,1 bis 30 Gewichtsteile HALS-Stabilisatoren,
gegebenenfalls (C) 10 bis 300 Gewichtsteile eines oder mehrerer Reaktivverdünners,
gegebenenfalls (D) 25 bis 500 Gewichtsteile Siliconharze,
gegebenenfalls (E) 10 bis 300 Gewichtsteile nicht reaktiver Weichmacher,
(F) 0,1 bis 25 Gewichtsteile Stickstoff aufweisende Organosiliciumverbindungen,
gegebenenfalls (G) Füllstoffe,
gegebenenfalls (H) Katalysatoren,
gegebenenfalls (I) Haftvermittler,
gegebenenfalls (J) Wasserfänger,
gegebenenfalls (K) Additive und
gegebenenfalls (L) Zuschlagstoffe,
mit der Maßgabe, dass Beschichtungszusammensetzungen (BS) mindestens eine weitere Komponente ausgewählt aus Reaktivverdünnern (C), Siliconharzen (D) und nicht reaktiven Weichmachern (E) enthalten.

Bei den erfindungsgemäßen Beschichtungszusammensetzungen (BS) handelt es sich besonders bevorzugt um solche enthaltend
(A) 100 Gewichtsteile Verbindungen der Formel (I),
(B) 0,1 bis 30 Gewichtsteile HALS-Stabilisatoren,
gegebenenfalls (C) 10 bis 300 Gewichtsteile eines oder mehrerer Reaktivverdünners,
gegebenenfalls (D) 25 bis 500 Gewichtsteile Siliconharze,
gegebenenfalls (E) 10 bis 300 Gewichtsteile nicht reaktiver Weichmacher,
(F) 0,1 bis 25 Gewichtsteile Stickstoff aufweisende Organosiliciumverbindungen,
gegebenenfalls (G) Füllstoffe,
gegebenenfalls (H) Katalysatoren,
gegebenenfalls (I) Haftvermittler,
gegebenenfalls (J) Wasserfänger,
(K) 0,01 bis 30 Gewichtsteile UV-Absorber,
gegebenenfalls (K) weitere Additive und
gegebenenfalls (L) Zuschlagstoffe,
mit der Maßgabe, dass Beschichtungszusammensetzungen (BS) mindestens eine weitere Komponente ausgewählt aus Reaktivverdünnern (C), Siliconharzen (D) und nicht reaktiven Weichmachern (E) enthalten.

Bei den erfindungsgemäßen Beschichtungszusammensetzungen (BS) handelt es sich insbesondere um solche enthaltend
(A) 100 Gewichtsteile Verbindungen der Formel (I),
(B) 0,5 bis 25 Gewichtsteile HALS-Stabilisatoren,
gegebenenfalls (C) 25 bis 200 Gewichtsteile eines oder mehrerer Reaktivverdünners,
gegebenenfalls (D) 50 bis 300 Gewichtsteile Siliconharze,
gegebenenfalls (E) 40 bis 250 Gewichtsteile nicht reaktiver Weichmacher,
(F) 0,5 bis 15 Gewichtsteile Stickstoff aufweisende Organosiliciumverbindungen,
gegebenenfalls (G) Füllstoffe,
gegebenenfalls (H) Katalysatoren,
gegebenenfalls (I) Haftvermittler,
gegebenenfalls (J) Wasserfänger,
(K) 0,1 bis 20 Gewichtsteile UV-Absorber
gegebenenfalls (K) weiterer Additive und
gegebenenfalls (L) Zuschlagstoffe, mit der Maßgabe, dass Beschichtungszusammensetzungen (BS) mindestens eine weitere Komponente ausgewählt aus Reaktivverdünnern (C), Siliconharzen (D) und nicht reaktiven Weichmachern (E) enthalten.

Die erfindungsgemäßen Beschichtungszusammensetzungen (BS) enthalten außer den Komponenten (A) bis (L) vorzugsweise keine weiteren Bestandteile.

Bei den erfindungsgemäß eingesetzten Komponenten kann es sich jeweils um eine Art einer solchen Komponente wie auch um ein Gemisch aus mindestens zwei Arten einer jeweiligen Komponente handeln.

Bei den erfindungsgemäßen Beschichtungszusammensetzungen (BS) handelt es sich bevorzugt um einkomponentige, unter Ausschluss von Wasser lagerfähige, bei Zutritt von Wasser bei Raumtemperatur vernetzbare Massen. Die erfindungsgemäßen Massen können aber auch Teil von zweikomponentigen Vernetzungssystemen sein, bei denen in einer zweiten Komponente OH-haltige Verbindungen, wie Wasser, hinzugefügt werden.

Vorzugsweise weisen die erfinderische Beschichtungszusammensetzungen (BS) bei 20 °C eine Viskosität von bevorzugt höchstens 20 000 mPas, besonders bevorzugt von 100 bis 10 000 mPas, insbesondere von 500 bis 5 000 mPas, auf.

Vorzugsweise zeigen die erfinderische Beschichtungszusammensetzungen (BS) thixotropes Verhalten, d.h., sie weisen bei hohen Scherraten eine niedrigere Viskosität auf als bei geringeren Scherraten.

Die Herstellung der erfindungsgemäßen Massen (BS) kann nach beliebiger und an sich bekannter Art und Weise erfolgen, wie etwa nach Methoden und Mischverfahren, wie sie zur Herstellung von feuchtigkeitshärtenden Zusammensetzungen üblich sind. Die Reihenfolge, in der die verschiedenen Bestandteile miteinander vermischt werden, kann dabei beliebig variiert werden.

Ein weiterer Gegenstand der vorliegenden Erfindung ist ein Verfahren zur Herstellung der erfindungsgemäßen Zusammensetzungen durch Mischen der einzelnen Komponenten in beliebiger Reihenfolge.

Dieses Vermischen kann bei Raumtemperatur und dem Druck der umgebenden Atmosphäre, also etwa 900 bis 1100 hPa, erfolgen. Falls erwünscht, kann dieses Vermischen aber auch bei höheren Temperaturen erfolgen, z.B. bei Temperaturen im Bereich von 30 bis 130°C. Weiterhin ist es möglich, zeitweilig oder ständig unter vermindertem Druck zu mischen, wie z.B. bei 30 bis 500 hPa Absolutdruck, um flüchtige Verbindungen und/oder Luft zu entfernen.

Das erfindungsgemäße Vermischen erfolgt bevorzugt unter Ausschluss von Feuchtigkeit.

Das erfindungsgemäße Verfahren kann kontinuierlich oder diskontinuierlich durchgeführt werden.

Zur Herstellung der erfindungsgemäßen Zusammensetzungen können auch eine oder mehrere Vormischungen einzelner Komponenten hergestellt und diese dann miteinander vermischt werden.

Eine besonders vorteilhafte Variante des erfindungsgemäßen Verfahrens sieht zunächst die Herstellung eines sogenannten Masterbatches (MS) vor, bei dem ein oder mehrere der in der Regel festen HALS-Stabilisatoren (B) in einer Konzentration von mindestens 5 Gew.-%, vorzugsweise von mindestens 10 Gew.-%, besonders bevorzugt von mindestens 20 Gew.-%, insbesondere von mindestens 30 Gew.-%, in einer oder mehreren flüssigen Komponenten der Beschichtungszusammensetzung (BS) gelöst werden. Bei der eigentlichen Herstellung der Beschichtungszusammensetzung (BS) wird dann dieser flüssige Masterbatch (MS) anstelle des festen HALS-Stabilisators (B) eingesetzt.

Als geeignete Komponenten zum Lösen der HALS-Stabilisatoren (B) können die Komponenten (C), (D), (E), (F), (I), (J) oder (L) dienen, wobei die Komponenten (C), (D), (E) und (J) bevorzugt und die Komponente (J) besonders bevorzugt werden.

Vorzugsweise handelt es sich bei der Masterbatchmischung (MS) um eine Lösung eines oder mehrerer HALS-Stabilisatoren (B) in Vinyl- oder Phenyltrimethoxysilan oder Vinyl- oder Phenyltriethoxysilan, insbesondere um eine Lösung in Vinyltrimethoxysilan.

In einer besonders vorteilhaften Ausführung werden der Masterbatchmischung (MS) zusätzlich auch noch UV-Absorber und/oder ein Antioxidans (K) zugegeben. Dies hat für den Hersteller der erfindungsgemäßen Beschichtungszusammensetzung (BS) den Vorteil, dass er mit dem Masterbatch (MS) nur noch eine einzige Komponente zugeben muss, um eine optimale Witterungsbeständigkeit zu erreichen.

Ein Herstellverfahren für die Beschichtungszusammensetzung (BS) unter Einsatz einer Masterbatchmischung (MS) ist ebenfalls Gegenstand der Erfindung.

Die erfindungsgemäßen bzw. erfindungsgemäß hergestellten Zusammensetzungen eignen sich hervorragend zur Beschichtung von Oberflächen, vorzugsweise zur Abdichtung von Oberflächen im Außenbereich von Gebäuden, insbesondere von Flachdächern, gegen das Eindringen von Wasser.

Ein weiterer Gegenstand der Erfindung ist ein Verfahren zur Beschichtung von Oberflächen durch Auftragen der erfindungsgemäßen oder erfindungsgemäß hergestellten Beschichtungszusammensetzung (BS) auf die zu beschichtende Oberfläche, bevorzugt zur Beschichtung von Oberflächen im Außenbereich von Gebäuden, insbesondere zur Beschichtung von Flachdächern.

Die erfindungsgemäßen Beschichtungszusammensetzungen (BS) können dabei auf beliebige und bisher bekannte Art auf die zu beschichtenden Oberflächen aufgetragen und härten gelassen werden.

Die erfindungsgemäße Applikation erfolgt dabei vorzugsweise mittels Pinsel, Roller, Rakel oder kommerziellen Sprühgeräten wie Airless-Geräten.

Die erfindungsgemäßen Beschichtungszusammensetzungen (BS) werden dabei vorzugsweise in einer Schichtdicke von 0,1 mm bis 50 mm, besonders bevorzugt in einer Schichtdicke von 0,2 mm bis 20 mm, insbesondere in einer Schichtdicke von 0,3 mm bis 10 mm, auf die zu beschichtende Oberfläche aufgetragen.

Bevorzugte Beispiele für Oberflächen, auf die die erfindungsgemäßen Beschichtungszusammensetzungen (BS) aufgetragen werden können, sind mineralische Baustoffe wie Steine oder Beton, Metalle, Dachpappen, Kunststoffe, Fasergewebe, Holz, Glas oder Keramik. Die erfindungsgemäßen Beschichtungszusammensetzungen (BS) zeigen vorzugsweise thixotropes Verhalten und können sowohl auf horizontale als auch vertikale Flächen appliziert werden.

Für die Vernetzung der erfindungsgemäßen Beschichtungszusammensetzungen (BS) reicht der übliche Wassergehalt der Luft aus. Die Vernetzung der erfindungsgemäßen Massen erfolgt vorzugsweise bei Raumtemperatur. Sie kann, falls erwünscht, auch bei höheren oder niedrigeren Temperaturen als Raumtemperatur, z.B. bei -5° bis 15°C oder bei 30° bis 50°C und/oder mittels des normalen Wassergehaltes der Luft übersteigenden Konzentrationen von Wasser durchgeführt werden.

Vorzugsweise wird die Vernetzung bei einem Druck von 100 bis 1100 hPa, insbesondere beim Druck der umgebenden Atmosphäre, also etwa 900 bis 1100 hPa, durchgeführt.

Ein weiterer Gegenstand sind Formkörper hergestellt durch Vernetzung der erfindungsgemäßen oder erfindungsgemäß hergestellten Zusammensetzungen (BS).

Bevorzugt handelt es sich bei den erfindungsgemäßen Formkörpern um Beschichtungen.

Die erfindungsgemäßen Zusammensetzungen haben den Vorteil, dass sie leicht herzustellen sind.

Die erfindungsgemäßen vernetzbaren Zusammensetzungen haben den Vorteil, dass sie sich durch eine sehr hohe Lagerstabilität und eine hohe Vernetzungsgeschwindigkeit auszeichnen.

Ferner haben die erfindungsgemäßen vernetzbaren Zusammensetzungen den Vorteil, dass sie ein ausgezeichnetes Haftungsprofil und eine hervorragende Elastizität aufweisen. Zudem zeichnen sie sich durch eine gute Überstreichbarkeit aus.

Des Weiteren haben die erfindungsgemäßen vernetzbaren Zusammensetzungen den Vorteil, dass niederviskos und somit auch im lösungsmittelfreien Zustand leicht zu verarbeiten sind.

Des Weiteren haben die erfindungsgemäßen Zusammensetzungen den Vorteil, dass daraus erhaltene Beschichtungen sehr bewitterungsstabil sind. Während herkömmliche HALS-Stabilisatoren bei einer Bewitterung nach und nach vom Regenwasser ausgewaschen werden verbleiben die Stabilisatoren der erfindungsgemäßen Beschichtungen hingegen überraschenderweise auch bei einer Bewitterung zu weitaus größeren Teilen in der Beschichtung.

In den nachstehend beschriebenen Beispielen beziehen sich alle Viskositätsangaben auf eine Temperatur von 25°C. Sofern nicht anders angegeben, werden die nachstehenden Beispiele bei einem Druck der umgebenden Atmosphäre, also etwa bei 1000 hPa, und bei Raumtemperatur, also bei etwa 23°C, bzw. bei einer Temperatur, die sich beim Zusammengeben der Reaktanden bei Raumtemperatur ohne zusätzliche Heizung oder Kühlung einstellt, sowie bei einer relativen Luftfeuchtigkeit von etwa 50 % durchgeführt. Des Weiteren beziehen sich alle Angaben von Teilen und Prozentsätzen, soweit nichts anderes angegeben ist, auf das Gewicht.

### Beispiele

**Eingesetzte Stabilisatoren: monomere oder dimere HALS-Stabilisatoren:**

| | |
|---|---|
| Tinuvin® 123: | *Bis*-(2,2,6,6-Tetramethyl-1-(octyloxy)-4-piperidinyl)-decandisäureester; CAS-Nr.: 129757-67-1; käuflich erhältlich bei der BASF SE (D-Ludwigshafen) |
| Tinuvin® 152: | 2,4-*Bis*-[*N*-Butyl-*N*-(1-cyclohexyloxy-2,2,6,6-tetramethylpiperidin-4-yl)-amino]-6-(2-hydroxyethylamine)-1,3,5-triazine; CAS-Nr.: 191743-75-6; käuflich erhältlich bei der BASF SE (D-Ludwigshafen) |
| Tinuvin® 765: | Mischung aus *Bis*-(1,2,2,6,6-Pentamethyl-4-piperidyl)-sebacat und Methyl-1,2,2,6,6-pentamethyl-4-piperidyl-sebacat; CAS-Nr.: 41556-26-7 und 82919-37-7; käuflich erhältlich bei der BASF SE (D-Ludwigshafen) |

**Dimere HALS-Stabilisatoren mit einer 2,6-Di-t-Butylphenolstruktur:**

| | |
|---|---|
| Tinuvin® 144: | *Bis*-(1,2,2,6,6-Pentamethyl-4-piperidinyl)-[[3,5-*bis*-(1,1-dimethylethyl)-4-hydroxyphenyl]-methyl]-butylmalonate; CAS-Nr.: 63843-89-0; käuflich erhältlich bei der BASF SE (D-Ludwigshafen) |

**Oligomere HALS-Stabilisatoren:**

| | |
|---|---|
| Chimassorb® 944: | *Poly*-[[6-1(1,1,3,3-Tetramethylbutyl)-aminol-1,3,5-triazine-2,4-diyl][(2,2,6,6-tetramethyl-4-piperidinyl)-imino]-1,6-hexanediyl-[(2,2,6,6-tetramethyl-4-piperidinyl)-imino]]; CAS-Nr.: 71878-19-8; 70624-18-9 (US); käuflich erhältlich bei der BASF SE (D-Ludwigshafen) |
| Chimassorb® 2020: | Reaktionsprodukt aus *N,N'-bis*-(2,2,6,6-Tetramethyl-4-piperidinyl)-1,6-hexanediamin mit 2,4,6-Trichloro-1,3,5-triazine und *N-*Butyl-1-butanamine und *N*-Butyl-2,2,6,6-tetramethyl-4-piperidinamine; CAS-Nr.: 192268-64-7; käuflich erhältlich bei der BASF SE (D-Ludwigshafen) |

**UV-Absorber:**

| | |
|---|---|
| Tinuvin® 400: | 2-Hydroxyphenyl-s-triazin-Derivat (CAS-Nr.: 107-98-2), 85 % in 1-Methoxypropan-2-ol; käuflich erhältlich bei der BASF SE (D-Ludwigshafen) |

### Beispiel 1

### Herstellung einer HALS-Masterbatch-Lösung

In einem 500 ml Kolben mit Rührer werden 80 g Vinyltrimethoxysilan vorgelegt und mit 80 g Chimassorb® 2020 versetzt und für 15 min gerührt, wobei sich eine homogene, leicht opaque Lösung bildet. Dann werden 40 g Tinuvin® 400 zudosiert und für weitere 30 min gerührt. Die fertige Lösung ist klar, leicht gelblich und weist eine Brookfield-Viskosität von 350-450 mPas auf.

### Beispiel 2a: Herstellung einer 1K-Beschichtungsformulierung

168,3 g silanterminiertes Polypropylenglycol mit einer mittleren Molmasse (Mn) von 12000 g/mol und Endgruppen der Formel -O-C(=O)-NH-CH₂-SiCH₃(OCH₃)₂ (käuflich erhältlich unter der Bezeichnung GENIOSIL® STP-E10 bei der Wacker Chemie AG, D-München), 84,1 g silanterminiertes Polypropylenglycol mit einer mittleren Molmasse (Mn) von 12000 Dalton und Endgruppen der Formel -O-C(=O)-NH-(CH₂)₃-Si(OCH₃)₃ (käuflich erhältlich unter der Bezeichnung GENIOSIL® STP-E15 bei der Wacker Chemie AG, D-München) und 192,4 g Hexadecyltrimethoxysilan werden in einem Laborplanetenmischer der Fa. PC-Laborsystem, ausgestattet mit zwei Balkenmischern, bei ca. 25°C mit 4,2 g Methylcarbamatomethyl-methyldimethoxysilan, 20,0 g Vinyltrimethoxysilan und 20 g Chimassorb® 2020 für 2 Minuten bei 200 U/min homogenisiert. Dann werden 119,0 g Aluminiumtrihydroxid mit einer BET-Oberfläche von 3-5 m²/g und einem d50-Wert von 1,7-2,1 µm (käuflich erhältlich unter der Bezeichnung "Martinal® OL 104" bei der Fa. Albemarle Corp.), 370,0 g Kreide mit einer BET-Oberfläche von 3 m²/g und einem d50-Wert von 0,45 µm (käuflich unter der Bezeichnung "Imerseal® 50" bei der Fa. Imerys) und 15 g pyrogene Kieselsäure mit einer BET-Oberfläche von ca. 200 m²/g, deren Oberfläche mit Trimethylsiloxygruppen modifiziert ist (käuflich erhältlich unter HDK® H2000 bei der Wacker Chemie AG, D-München) unter Rühren eine Minute bei 600 U/min aufgeschlossen. Danach werden 7,0 g 3-Aminopropyl-trimethoxysilan für 1 Minute bei 200 U/min eingemischt. Schließlich wird für 2 Minuten bei 600 U/min und für 1 Minute bei 200 U/min beim Druck von 100 mbar homogenisiert und blasenfrei gerührt.

Man erhält eine Dichtmasse mit einer Viskosität von 19500 mPas (Brookfield, Spindel 6, 5,0 min⁻¹) bzw. 5200 mPas (Brookfield, Spindel 6, 50 min⁻¹).

### Beispiel 2b: Herstellung einer 1K-Beschichtungsformulierung

Es wird ebenso vorgegangen wie in Beispiel 2a beschrieben, nur dass anstelle des Chimassorb® 2020 eine identische Menge Chimassorb® 944 eingesetzt wird.

### Beispiel 2c: Herstellung einer 1K-Beschichtungsformulierung

Es wird ebenso vorgegangen wie in Beispiel 2a beschrieben, nur dass anstelle der 20 g Chimassorb® 2020 und des Vinyltrimethoxysilans 50 g der in Beispiel 1 hergestellten Masterbatch-Lösung zugegeben werden. Diese Masterbatch-Lösung enthält ebenfalls 20 g Chimassorb® 2020, weist aber gegenüber dem reinen Stabilisator die Vorteile auf, flüssig zu sein und zusätzlich mit dem Tinuvin® 400 auch noch 10 g eines UV-Absorbers zu enthalten.

### Beispiel 2d: Herstellung einer 1K-Beschichtungsformulierung

Es wird ebenso vorgegangen wie in Beispiel 2a beschrieben, nur dass anstelle des Chimassorb® 2020 eine identische Menge Tinuvin® 144 eingesetzt wird.

### Vergleichsbeispiele V2e bis V2g: Herstellung einer 1K-Beschichtungsformulierung

Es wird ebenso vorgegangen wie in Beispiel 2a beschrieben, nur dass anstelle des Chimassorb® 2020 eine identische Menge des folgenden monomeren oder dimeren HALS-Stabilisators eingesetzt wird:
Beispiel V2e: Tinuvin® 152
Beispiel V2f: Tinuvin® 765
Beispiel V2g: Tinuvin® 123

### Beispiel 3a: Bestimmung von Hautbildungszeiten und mechanischen Eigenschaften

### Hautbildungszeit (HBZ)

Zur Bestimmung der Hautbildungszeit werden die in den Beispielen 2a bis 2d und V2e bis V2g erhaltenen Beschichtungsformulierungen in einer 2 mm dicken Schicht auf PE-Folie aufgetragen und bei Normklima (23°C und 50% relative Luftfeuchtigkeit) gelagert. Während des Aushärtens wird alle 5 min die Bildung einer Haut getestet. Dazu wird ein trockener Laborspatel vorsichtig auf die Oberfläche der Probe aufgesetzt und nach oben gezogen. Bleibt Probe am Finger kleben, hat sich noch keine Haut gebildet. Bleibt keine Probe am Finger mehr kleben, so hat sich eine Haut gebildet. Die entsprechende Zeit ist in Tabelle 1 angegeben.

### Mechanische Eigenschaften der ausgehärteten Beschichtungen

Die Beschichtungsformulierungen der Beispiele 2a bis 2d und V2e bis V2g werden jeweils auf ausgefrästen Teflonplatten mit 2 mm Tiefe ausgestrichen und 2 Wochen bei 23°C, 50% rel. Luftfeuchte gehärtet.

Shore-A-Härte wird gemäß DIN 53505 bestimmt.

Reißfestigkeit wird gemäß DIN 53504-S1 bestimmt.
Reißdehnung wird gemäß DIN 53504-S1 bestimmt.

Die entsprechenden Ergebnisse sind in Tabelle 1 angegeben.

**Tabelle 1:**

| Beispiel | 2a | 2b | 2c | 2d | V2e | V2f | V2g |
|---|---|---|---|---|---|---|---|
| Hautbildungszeit [min] | 35 | 34 | 35 | 33 | 36 | 36 | 34 |
| Shore-A-Härte | 68 | 67 | 67 | 69 | 66 | 69 | 68 |
| Reißfestigkeit [N/mm²] | 2,3 | 2,3 | 2,2 | 2,4 | 2,3 | 2,3 | 2,2 |
| Reißdehnung [%] | 250 | 245 | 251 | 254 | 248 | 250 | 252 |

### Beispiel 3b: Bewitterungstest

Aus den Beschichtungsformulierungen der Beispiele 2a bis 2d und V2e bis V2g werden jeweils 0,5 mm dicke Filme in einer Größe von 45 mal 45 mm hergestellt, indem die jeweilige Formulierung mittels eines 550µm-Rakels auf einer PE Folie aufgerakelt und anschließend für 2 Wochen bei 23°C und 50% rel. Luftfeuchte härten gelassen werden.

Die fertig ausgehärteten Filme werden von der PE-Folie abgelöst, und eine Fläche von 35 mal 45 mm wird in einem Xenotest Beta LM der Fa. Atlas bewittert. Die Bewitterung erfolgt entsprechend der Norm DIN EN ISO 11341 und simuliert eine Freilandbewitterung. Dabei wechseln sich in einem Zyklus jeweils 12 min Regen und 108 min trockene Bewitterung ab. Das Bestrahlungsspektrum entspricht weitgehend dem des Sonnenlichtes, und UV-Strahlung hat eine Stärke von ca. 60 W/mm². Im Xenotester herrschen eine Luftfeuchtigkeit von Reißfestigkeit wird gemäß DIN 53504-S1 bestimmt. Reißdehnung wird gemäß DIN 53504-S1 bestimmt.

Die entsprechenden Ergebnisse sind in Tabelle 1 angegeben.

**Tabelle 1:**

| Beispiel | 2a | 2b | 2c | 2d | V2e | V2f | V2g |
|---|---|---|---|---|---|---|---|
| Hautbildungszeit [min] | 35 | 34 | 35 | 33 | 36 | 36 | 34 |
| Shore-A-Härte | 68 | 67 | 67 | 69 | 66 | 69 | 68 |
| Reißfestigkeit [N/mm²] | 2,3 | 2,3 | 2,2 | 2,4 | 2,3 | 2,3 | 2,2 |
| Reißdehnung [%] | 250 | 245 | 251 | 254 | 248 | 250 | 252 |

### Beispiel 3b: Bewitterungstest

Aus den Beschichtungsformulierungen der Beispiele 2a bis 2d und V2e bis V2g werden jeweils 0,5 mm dicke Filme in einer Größe von 45 mal 45 mm hergestellt, indem die jeweilige Formulierung mittels eines 550µm-Rakels auf einer PE Folie aufgerakelt und anschließend für 2 Wochen bei 23°C und 50 rel. Luftfeuchte härten gelassen werden.

Die fertig ausgehärteten Filme werden von der PE-Folie abgelöst, und eine Fläche von 35 mal 45 mm wird in einem Xenotest Beta LM der Fa. Atlas bewittert. Die Bewitterung erfolgt entsprechend der Norm DIN EN ISO 11341 und simuliert eine Freilandbewitterung. Dabei wechseln sich in einem Zyklus jeweils 12 min Regen und 108 min trockene Bewitterung ab. Das Bestrahlungsspektrum entspricht weitgehend dem des Sonnenlichtes, und UV-Strahlung hat eine Stärke von ca. 60 W/mm². Im Xenotester herrschen eine Luftfeuchtigkeit von Chimassorb® 2020 für 2 Minuten bei 200 U/min homogenisiert. Dann werden 489,0 g Imerseal 50 und 15 g HDK® unter Rühren eine Minute bei 600 U/min aufgeschlossen. Danach werden 7,0 g 3-Aminopropyl-trimethoxysilan für 1 Minute bei 200 U/min eingemischt. Schließlich wird für 2 Minuten bei 600 U/min und für 1 Minute bei 200 U/min beim Druck von 100 mbar homogenisiert und blasenfrei gerührt.

Man erhält eine Dichtmasse mit einer Viskosität von 14200 mPas (Brookfield, Spindel 6, 5,0 min⁻¹) bzw. 5400 mPas (Brookfield, Spindel 6, 50 min⁻¹).

### Beispiel 4b: Herstellung einer 1K-Beschichtungsformulierung

Es wird ebenso vorgegangen wie in Beispiel 4a beschrieben, nur dass anstelle des Chimassorb® 2020 eine identische Menge Chimassorb® 944 eingesetzt wird.

### Beispiel 4c: Herstellung einer 1K-Beschichtungsformulierung

Es wird ebenso vorgegangen wie in Beispiel 4a beschrieben, nur dass anstelle der 20 g Chimassorb® 2020 und des Vinyltrimethoxysilans 50 g der in Beispiel 1 hergestellten Masterbatch-Lösung zugegeben werden. Diese Masterbatch-Lösung enthält ebenfalls 20 g Chimassorb® 2020, weist aber gegenüber dem reinen Stabilisators die Vorteile auf, flüssig zu sein und zusätzlich mit dem Tinuvin® 400 auch noch 10 g eines UV-Absorbers zu enthalten.

### Vergleichsbeispiele V4d bis V4f: Herstellung 1K-Beschichtungsformulierung

Es wird ebenso vorgegangen wie in Beispiel 4a beschrieben, nur dass anstelle des Chimassorb® 2020 eine identische Menge des folgenden monomeren oder dimeren HALS-Stabilisators eingesetzt wird:
Beispiel V4d: Tinuvin® 152
Beispiel V4e: Tinuvin® 765
Beispiel V4f: Tinuvin® 123.

### Beispiel 5a: Bestimmung von Hautbildungszeiten und mechanischen Eigenschaften

Hautbildungszeit und mechanische Eigenschaften wurden wie in Beispiel 3a beschrieben bestimmt. Die entsprechenden Ergebnisse sind in Tabelle 3 angegeben.

**Tabelle 3:**

| Beispiel | 4a | 4b | 4c | V4d | V4e | V4f |
|---|---|---|---|---|---|---|
| Hautbildungszeit [min] | 35 | 33 | 36 | 34 | 35 | 36 |
| Shore-A-Härte | 30 | 29 | 29 | 31 | 29 | 30 |
| Reißfestigkeit [N/mm²] | 1,2 | 1,2 | 1,3 | 1,1 | 1,2 | 1,1 |
| Reißdehnung [%] | 405 | 418 | 398 | 396 | 411 | 399 |

### Beispiel 5b: Bewitterungstest

Aus den Beschichtungsformulierungen der Beispiele 4a bis 4c sowie V4d bis V4f werden jeweils 0,5 mm dicke Filme in einer Größe von 45 mal 45 cm hergestellt, indem die jeweilige Formulierung mittels eines 550µm-Rakels auf einer PE Folie aufgerakelt und anschließend für 2 Wochen bei 23°C, 50% rel. Luftfeuchte härten gelassen werden.

Die fertig ausgehärteten Filme werden von der PE-Folie abgelöst und in einem Xenotest Beta LM der Fa. Atlas wie bei Beispiel 3 beschrieben bewittert. Dabei werden die in Tabelle 4 erhaltenen Ergebnisse erzielt.

Die in Tabelle 4 angegebenen Zahlenwerte entsprechen dem Tag der Bewitterung, an dem das in der ersten Spalte angegebene Ereignis erstmalig beobachtet wurde.

**Tabelle 4:**

| Beispiel | 4a | 4b | 4c | V4d | V4e | V4f |
|---|---|---|---|---|---|---|
| Verwendeter Stabilisator | Chim. 2020 | Chim. 994 | Chim. 2020 | Tin. 152 | Tin. 765 | Tin. 123 |
| Einzelne flüssige Stellen | >200 | >200 | >200 | 7 | 18 | 8 |
| Film komplett zersetzt | >200 | >200 | >200 | 25 | 25 | 12 |

Die Formulierungen aus den Beispielen 4a bis 4c waren nach 200 Tagen unverändert. Auch nach 250 Tagen zeigten die besonders bevorzugten Formulierungen aus den Beispielen 4a und 4b noch keine flüssigen Stellen, waren jedoch etwas weicher geworden. Die besonders bevorzugte Formulierung aus dem Beispiel 4c war auch nach 250 Tagen noch vollkommen unverändert.

## Patentansprüche

1. Feuchtigkeitshärtende Beschichtungszusammensetzungen (BS) enthaltend
(A) mindestens eine Verbindung der Formel
Y-[(CR¹₂)_{b}-SiRₐ(OR²)₃₋ₐ]ₓ (I),
wobei
Y einen x-wertigen, über Stickstoff, Sauerstoff, Schwefel oder Kohlenstoff gebundenen Polymerrest bedeutet,
R gleich oder verschieden sein kann und einen einwertigen, gegebenenfalls substituierten, SiC-gebundenen Kohlenwasserstoffrest darstellt,
R¹ gleich oder verschieden sein kann und Wasserstoffatom oder einen einwertigen, gegebenenfalls substituierten Kohlenwasserstoffrest darstellt, der über Stickstoff, Phosphor, Sauerstoff, Schwefel oder Carbonylgruppe an das Kohlenstoffatom angebunden sein kann,
R² gleich oder verschieden sein kann und Wasserstoffatom oder einen einwertigen, gegebenenfalls substituierten Kohlenwasserstoffrest darstellt,
x eine ganze Zahl von 1 bis 10 ist,
a gleich oder verschieden sein kann und 0, 1 oder 2 ist und
b gleich oder verschieden sein kann und eine ganze Zahl von 1 bis 10 ist,
(B) eine oder mehrere HALS-Stabilisatoren, die ausgewählt werden aus
(B1) Mischungen verschiedener organischer Verbindungen, die pro Molekül mindestens eine funktionelle Gruppe der Formel 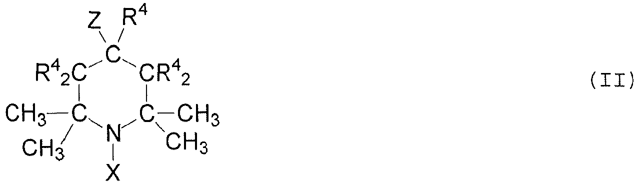 aufweisen, mit der Maßgabe, dass die in dieser Mischung enthaltenen organischen Verbindungen pro Molekül im Mittel mehr als zwei funktionelle Gruppen der Formel (II) enthalten,
(B2) organischen Verbindungen mit mindestens drei funktionellen Gruppen der Formel (II) und
(B3) organischen Verbindungen mit mindestens drei funktionellen Gruppen, ausgewählt aus funktionellen Gruppen der Formel (II) und gegebenenfalls substituierten Hydroxyphenylgruppen,
wobei
X einen N-gebundenen, einwertigen Rest R³, einen Rest -OR³ oder einen Rest -C(=O)R³ oder eine chemische Bindung zu weiteren Strukturelementen des Stabilisatormoleküls darstellt,
Z Wasserstoffatom, einen Rest -OR¹³ oder eine NR¹³₂-Gruppe darstellt,
R³ gleich oder verschieden sein kann und ein Wasserstoffatom oder einen einwertigen gegebenenfalls substituierten Kohlenwasserstoffrest, der von Sauerstoffatomen, Estergruppen oder Amingruppen unterbrochenen sein kann, darstellt,
R¹³ gleich oder verschieden sein kann und eine der für R³ angegebene Bedeutung hat oder eine chemische Bindung zu weiteren Strukturelementen des Stabilisatormoleküls darstellt, und
R⁴ gleich oder verschieden sein kann und ein Wasserstoffatom oder einen einwertigen, gegebenenfalls substituierten Kohlenwasserstoffrest darstellt,
mit der Maßgabe, dass mindestens einer der Reste X oder R¹³ in Formel (II) eine chemische Bindung zu weiteren Strukturelementen des Stabilisatormoleküls darstellt.

2. Beschichtungszusammensetzungen gemäß Anspruch 1 , **dadurch gekennzeichnet, dass** es sich bei Stabilisator (B) um Mischungen (B1) oder organische Verbindungen (B2) handelt.

3. Beschichtungszusammensetzungen gemäß Anspruch 1 oder 2, **dadurch gekennzeichnet, dass** sie zusätzlich zu den Komponenten (A) und (B) mindestens eine weitere Komponente ausgewählt aus Reaktivverdünnern (C), Siliconharzen (D) und nicht reaktiven Weichmachern (E) enthalten.

4. Beschichtungszusammensetzungen gemäß einem oder mehreren der Ansprüche 1 bis 3, **dadurch gekennzeichnet, dass** sie zusätzlich zu den Komponenten (A) und (B) mindestens eine weitere Komponente ausgewählt aus Reaktivverdünnern (C) und Siliconharzen (D) enthalten.

5. Beschichtungszusammensetzungen gemäß einem oder mehreren der Ansprüche 1 bis 4, **dadurch gekennzeichnet, dass** sie zusätzlich zu den Komponenten (A) und (B) Reaktivverdünner (C) enthalten.

6. Verfahren zur Herstellung der Zusammensetzungen gemäß einem oder mehreren der Ansprüche 1 bis 5 durch Mischen der einzelnen Komponenten in beliebiger Reihenfolge.

7. Verfahren gemäß Anspruch 6, **dadurch gekennzeichnet, dass** ein sogenannter Masterbatch (MS) hergestellt wird, wobei ein oder mehrere HALS-Stabilisatoren (B) in einer Konzentration von mindestens 5 Gew.-% in einer oder mehreren flüssigen Komponenten der Beschichtungszusammensetzung (BS) gelöst werden.

8. Verfahren zur Beschichtung von Oberflächen durch Auftragen der Beschichtungszusammensetzung (BS) gemäß einem oder mehreren der Ansprüche 1 bis 5 oder hergestellt gemäß Anspruch 6 oder 7 auf die zu beschichtende Oberfläche.

9. Verfahren gemäß Anspruch 8, **dadurch gekennzeichnet, dass** es sich bei den Oberflächen, auf die die Beschichtungszusammensetzungen (BS) aufgetragen werden können, um mineralische Baustoffe wie Steine oder Beton, Metalle, Dachpappen, Kunststoffe, Fasergewebe, Holz, Glas oder Keramik handelt.

10. Verfahren gemäß Anspruch 8 oder 9, **dadurch gekennzeichnet, dass** die Beschichtungszusammensetzungen (BS) in einer Schichtdicke von 0,1 mm bis 50 mm auf die zu beschichtende Oberfläche aufgetragen wird.

11. Verfahren gemäß einem oder mehreren der Ansprüche 8 bis 10, **dadurch gekennzeichnet, dass** Oberflächen im Außenbereich von Gebäuden beschichtet werden.

12. Formkörper hergestellt durch Vernetzung der Zusammensetzungen (BS) gemäß einem oder mehreren der Ansprüche 1 bis 5 oder hergestellt gemäß Anspruch 6 oder 7.

13. Formkörper gemäß Anspruch 12, **dadurch gekennzeichnet, dass** es sich um Beschichtungen handelt.

## Claims

1. Moisture-curing coating compositions (BS) comprising
(A) at least one compound of the formula
Y-[(CR¹₂)_{b}-SiRₐ(OR²)₃₋ₐ]ₓ (I),
where
Y denotes an x-valent polymer radical bonded via nitrogen, oxygen, sulfur or carbon,
R may be identical or different and represents a monovalent, optionally substituted, SiC-bonded hydrocarbon radical,
R¹ may be identical or different and represents hydrogen atom or a monovalent, optionally substituted hydrocarbon radical which may be attached to the carbon atom via nitrogen, phosphorus, oxygen, sulfur, or carbonyl group,
R² may be identical or different and denotes hydrogen atom or a monovalent, optionally substituted hydrocarbon radical,
x is an integer from 1 to 10,
a may be identical or different and is 0, 1 or 2, and
b may be identical or different and is an integer from 1 to 10,
(B) one or more HALS stabilizers, which are selected from
(B1) mixtures of different organic compounds which per molecule have at least one functional group of the formula 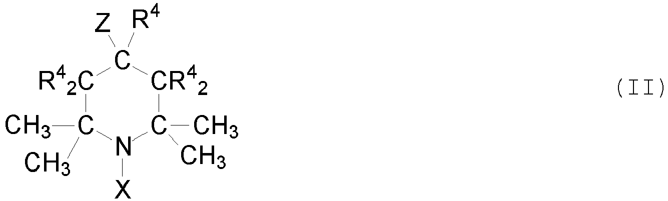 with the proviso that the organic compounds contained in this mixture contain per molecule on average more than two functional groups of the formula (II),
(B2) organic compounds having at least three functional groups of the formula (II), and
(B3) organic compounds having at least three functional groups selected from functional groups of the formula (II) and optionally substituted hydroxyphenyl groups,
where
X represents an N-bonded, monovalent radical R³, a radical -OR³ or a radical -C(=O)R³ or a chemical bond to further structural elements of the stabilizer molecule,
Z represents hydrogen atom, a radical -OR¹³ or a group NR¹³₂,
R³ may be identical or different and represents a hydrogen atom or a monovalent, optionally substituted hydrocarbon radical which may be interrupted by oxygen atoms, ester groups or amine groups,
R¹³ may be identical or different and has a definition as indicated for R³ or represents a chemical bond to further structural elements of the stabilizer molecule, and
R⁴ may be identical or different and represents a hydrogen atom or a monovalent, optionally substituted hydrocarbon radical,
with the proviso that at least one of the radicals X or R¹³ in formula (II) represents a chemical bond to further structural elements of the stabilizer molecule.

2. Coating compositions according to Claim 1, **characterized in that** stabilizer (B) comprises mixtures (B1) or organic compounds (B2).

3. Coating compositions according to Claim 1 or 2, **characterized in that** further to components (A) and (B) they comprise at least one further component selected from reactive diluents (C), silicone resins (D), and nonreactive plasticizers (E).

4. Coating compositions according to one or more of Claims 1 to 3, **characterized in that** further to components (A) and (B) they comprise at least one further component selected from reactive diluents (C) and silicone resins (D).

5. Coating compositions according to one or more of Claims 1 to 4, **characterized in that** further to components (A) and (B) they comprise reactive diluents (C) .

6. Process for producing the compositions according to one or more of Claims 1 to 5 by mixing the individual components in any order.

7. Process according to Claim 6, **characterized in that** a masterbatch (MS) is produced, wherein one or more HALS stabilizers (B) are dissolved in a concentration of at least 5 wt% in one or more liquid components of the coating composition (BS).

8. Process for coating surfaces by applying the coating composition (BS) according to one or more of Claims 1 to 5 or produced according to Claim 6 or 7 to the surface to be coated.

9. Process according to Claim 8, **characterized in that** the surfaces to which the coating compositions (BS) may be applied are mineral building materials such as stones or concrete, metals, roofing felts, plastics, woven fiber fabrics, wood, glass or ceramic.

10. Process according to Claim 8 or 9, **characterized in that** the coating compositions (BS) are applied in a layer thickness of 0.1 mm to 50 mm to the surface to be coated.

11. Process according to one or more of Claims 8 to 10, **characterized in that** surfaces in the exterior of buildings are coated.

12. Shaped article produced by crosslinking the compositions (BS) according to one or more of Claims 1 to 5 or produced according to Claim 6 or 7.

13. Shaped article according to Claim 12, **characterized in that** it is coatings.

## Revendications

1. Compositions de revêtement (BS) durcissant sous l'effet de l'humidité, contenant
(A) au moins un composé de formule
Y-[(CR¹₂)_{b}-SiRₐ(OR²)₃₋ₐ]ₓ (I),
dans laquelle
Y signifie un radical polymère x-valent, lié par azote, oxygène, soufre ou carbone,
R peut être identique ou différent et représente un radical hydrocarboné monovalent, le cas échéant substitué, lié par SiC,
R¹ peut être identique ou différent et représente un atome d'hydrogène ou un radical hydrocarboné monovalent, le cas échéant substitué, qui peut être lié à l'atome de carbone par l'intermédiaire d'azote, de phosphore, d'oxygène, de soufre ou d'un groupe carbonyle,
R² peut être identique ou différent et représente un atome d'hydrogène ou un radical hydrocarboné monovalent, le cas échéant substitué,
x vaut un nombre entier de 1 à 10,
a peut être identique ou différent et vaut 0, 1 ou 2 et
b peut être identique ou différent et vaut un nombre entier de 1 à 10,
(B) un ou plusieurs stabilisants de type HALS, qui sont choisis parmi
(B1) le mélange de différents composés organiques, qui présentent par molécule au moins un groupe fonctionnel de formule 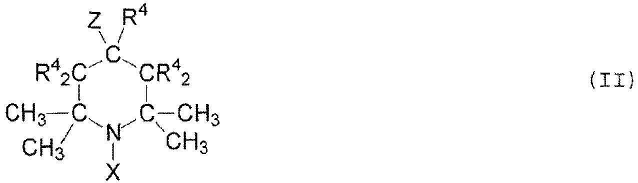 à condition que les composés organiques contenus dans ce mélange contiennent par molécule en moyenne plus de deux groupes fonctionnels de formule (II),
(B2) les composés organiques présentant au moins trois groupes fonctionnels de formule (II) et
(B3) les composés organiques présentant au moins trois groupes fonctionnels, choisis parmi les groupes fonctionnels de formule (II) et les groupes hydroxyphényle le cas échéant substitués
dans laquelle
X représente un radical R³ monovalent lié par N, un radical -OR³ ou un radical -C(=O)R³ ou une liaison chimique à d'autres éléments structuraux de la molécule de stabilisant,
Z représente un atome d'hydrogène, un radical -OR¹³ ou un groupe NR¹³₂,
R³ peut être identique ou différent et représente un atome d'hydrogène ou un radical hydrocarboné monovalent, le cas échéant substitué, qui peut être interrompu par des atomes d'oxygène, des groupes ester ou des groupes amine,
R¹³ peut être identique ou différent et présente une signification indiquée pour R³ ou une liaison chimique à d'autres éléments structuraux de la molécule de stabilisant et
R⁴ peut être identique ou différent et représente un atome d'hydrogène ou un radical hydrocarboné monovalent, le cas échéant substitué,
à condition qu'au moins un des radicaux X ou R¹³ dans la formule (II) représente une liaison chimique à d'autres éléments structuraux de la molécule de stabilisant.

2. Compositions de revêtement selon la revendication 1, **caractérisées en ce qu'**il s'agit, pour le stabilisant (B), de mélanges (B1) ou de composés organiques (B2).

3. Compositions de revêtement selon la revendication 1 ou 2, **caractérisées en ce qu'**elles contiennent, en plus des composants (A) et (B), au moins un autre composant choisi parmi les diluants réactifs (C), les résines siliconées (D) et les plastifiants non réactifs (E).

4. Compositions de revêtement selon l'une ou plusieurs des revendications 1 à 3, **caractérisées en ce qu'**elles contiennent, en plus des composants (A) et (B), au moins un autre composant choisi parmi les diluants réactifs (C) et les résines siliconées (D).

5. Compositions de revêtement selon l'une ou plusieurs des revendications 1 à 4, **caractérisées en ce qu'**elles contiennent, en plus des composants (A) et (B), des diluants réactifs (C).

6. Procédé pour la préparation des compositions selon l'une ou plusieurs des revendications 1 à 5 par mélange des différents composants dans un ordre quelconque.

7. Procédé selon la revendication 6, **caractérisé en ce qu'**on prépare ce qu'on appelle un lot maître (MS), un ou plusieurs stabilisants de type HALS (B) étant dissous en une concentration d'au moins 5% en poids dans un ou plusieurs composants liquides de la composition de revêtement (BS).

8. Procédé pour le revêtement de surfaces par application de la composition de revêtement (BS) selon l'une ou plusieurs des revendications 1 à 5 ou préparée selon la revendication 6 ou 7 sur la surface à revêtir.

9. Procédé selon la revendication 8, **caractérisé en ce qu'**il s'agit, pour les surfaces sur lesquelles les compositions de revêtement (BS) peuvent être appliquées, de matériaux de construction minéraux, comme la pierre ou le béton, de métaux, de feutres de toiture, de matériaux synthétiques, de tissus fibreux, de bois, de verre ou de céramique.

10. Procédé selon la revendication 8 ou 9, **caractérisé en ce que** les compositions de revêtement (BS) sont appliquées en une épaisseur de couche de 0,1 mm à 50 mm sur la surface à revêtir.

11. Procédé selon l'une ou plusieurs des revendications 8 à 10, **caractérisé en ce que** les surfaces sont revêtues dans la zone externe de bâtiments.

12. Corps façonnés, fabriqués par réticulation des compositions (BS) selon l'une ou plusieurs des revendications 1 à 5 ou préparées selon la revendication 6 ou 7.

13. Corps façonnés selon la revendication 12, **caractérisés en ce qu'**il s'agit de revêtements.
